# EUROPÄISCHE PATENTSCHRIFT

(11) **EP 3 231 198 B1**
(45) Veröffentlichungstag und Bekanntmachung des Hinweises auf die Patenterteilung: **29.05.2019**
(21) Anmeldenummer: 15801782.2
(22) Anmeldetag: 26.11.2015
(51) Int. Cl.: H04W 4/02, H04W 4/029, H04W 4/80, G05B 11/06, G08B 21/02

(54) **SYSTEM, INSBESONDERE HANDWERKZEUGMASCHINENSYSTEM**
SYSTEM, IN PARTICULAR PORTABLE POWER TOOL SYSTEM
SYSTÈME, NOTAMMENT SYSTÈME DE MACHINE-OUTIL À MAIN

(30) Priorität: 09.12.2014 DE 102014225332
(43) Veröffentlichungstag der Anmeldung: 18.10.2017
(73) Patentinhaber: Robert Bosch GmbH, 70442 Stuttgart (DE)
(72) Erfinder: SCHADOW, Joachim, 70563 Stuttgart (DE); STOCK, Joern, 72658 Bempflingen (DE); ESENWEIN, Florian, 70771 Leinfelden-Echterdingen (DE); POETTNER, Wolf-Bastian, 70597 Stuttgart (DE); MEYER, Janina, 72144 Reutlingen (DE); NOGUEIRA-NINE, Juan, 70327 Stuttgart (DE); POGORZELSKI, Kamil, 70176 Stuttgart (DE); WERNER, Martin, 72072 Tuebingen (DE); BARTHOLOMEYCZIK, Julian, 72762 Reutlingen (DE)
(86) Internationale Anmeldenummer: PCT/EP2015/077773
(87) Internationale Veröffentlichungsnummer: WO 2016/091605

(56) Entgegenhaltungen:
- EP-A1- 2 341 359
- US-A1- 2012 136 231
- US-A1- 2013 084 882
- US-A1- 2013 234 893
- US-A1- 2014 266 698

## Beschreibung

### Stand der Technik

Aus US 2013/0234893 A1 ist bereits ein System bekannt, das ein mobiles Funktionsmodul umfasst, welches eine Kommunikationseinheit zu einer Kommunikation von elektronischen Daten aufweist. Das System weist ferner eine beispielsweise als Brand- und/oder Rauchmeldevorrichtung ausgebildete Gebäudeinfrastrukturvorrichtung auf, die eine Kommunikationseinheit zu einer Kommunikation mit dem Funktionsmodul aufweist. Zudem umfasst das System eine Steuer- oder Regeleinheit, die dazu vorgesehen ist, anhand einer Auswertung einer Kommunikation zwischen dem Funktionsmodul und der Gebäudeinfrastrukturvorrichtung zumindest auf eine Position des Funktionsmoduls zu schließen.

Aus der EP 2 341 359 A1 und der US 2013/084882 A1 sind weiterhin Systeme analog der US 2013/0234893 A1 bekannt, bei denen ein Funktionsmodul zur Erfassung und/oder Übertragung einer gegenstandsspezifischen, einer bedienerspezifischen und/oder einer umgebungsspezifischen Kenngröße dient.

### Offenbarung der Erfindung

Die Erfindung ist durch den Gegenstand der unabhängigen Ansprüche 1 und 16 definiert. Die Erfindung geht aus von einem System, insbesondere von einem Handwerkzeugmaschinensystem, mit zumindest einem mobilen Funktionsmodul, das zumindest eine Kommunikationseinheit zu einer Kommunikation von elektronischen Daten aufweist, mit zumindest einer Gebäudeinfrastrukturvorrichtung, die zumindest eine Kommunikationseinheit zu einer Kommunikation mit dem Funktionsmodul aufweist, und mit zumindest einer Steuer- oder Regeleinheit, die dazu vorgesehen ist, anhand einer Auswertung einer Kommunikation zwischen dem Funktionsmodul und der Gebäudeinfrastrukturvorrichtung auf eine Position des Funktionsmoduls zu schließen. Das Funktionsmodul ist dazu vorgesehen, zumindest eine gegenstandsspezifische Kenngröße, eine bedienerspezifische Kenngröße und/oder eine umgebungsspezifische Kenngröße zu erfassen und/oder an die Gebäudeinfrastrukturvorrichtung zu übertragen.

Erfindungsgemäß weist die Steuer- oder Regeleinheit eine Zuordnungsfunktion auf, die dazu vorgesehen ist, in Abhängigkeit von den zwischen dem Funktionsmodul und der Gebäudeinfrastrukturvorrichtung übertragenen Daten eine Zuordnung zumindest eines Gegenstands, an dem das Funktionsmodul angeordnet ist, zu einem Individuum in Abhängigkeit einer gemeinsamen Bewegung zu realisieren.

Unter "vorgesehen" soll insbesondere speziell ausgelegt und/oder speziell ausgestattet verstanden werden. Darunter, dass ein Element und/oder eine Einheit zu einer bestimmten Funktion vorgesehen ist, soll insbesondere verstanden werden, dass das Element und/oder die Einheit diese bestimmte Funktion in zumindest einem Anwendungs- und/oder Betriebszustand erfüllen/erfüllt und/oder ausführen/ausführt.

Unter einem "mobilen Funktionsmodul" soll hier insbesondere ein Element, eine Einheit oder eine Vorrichtung verstanden werden, das oder die zumindest zu einer Ausgabe, einer Speicherung, einer Verarbeitung und/oder einer Kommunikation von Daten, insbesondere von elektronischen Daten, vorgesehen ist und insbesondere ungebunden von einem festen Standort ausgebildet ist, wie beispielsweise beweglich, fahrbar, tragbar, transportabel o. dgl. ausgebildet ist. Bevorzugt ist das mobile Funktionsmodul an einem Gegenstand oder an dem Individuum (Mensch, Tier) anordenbar, insbesondere zerstörungsfrei abnehmbar anordenbar. Vorzugsweise ist das mobile Funktionsmodul abnehmbar an dem Gegenstand oder an dem Individuum anordenbar. Es ist jedoch auch denkbar, dass das mobile Funktionsmodul unlösbar an dem Gegenstand oder an dem Individuum anordenbar ist, wie beispielsweise infolge einer Integration des mobilen Funktionsmoduls in den Gegenstand oder in das Individuum. Das mobile Funktionsmodul ist beispielsweise an einem als tragbare Werkzeugmaschine, als Arbeitsmittel (Leiter, Rollwagen, Transportameise o. dgl.), als Aufbewahrungsbehälter (Fluidbehälter, Werkzeugkoffer, Werkzeugkiste, Aktentasche o. dgl.), als Datenverarbeitungseinheit (Laptop, Tablet, Smartphone o. dgl.), als Kleidungsstück, als Haushaltsgerät (Reinigungsmaschine, insbesondere autonomer Staubsauger, Küchenmaschine, o. dgl.), als Werkzeug o. dgl. ausgebildeten Gegenstand oder an dem als Person oder Tier ausgebildeten Individuum anordenbar, insbesondere zerstörungsfrei abnehmbar anordenbar. Das Funktionsmodul umfasst vorzugsweise eine Energiespeichereinheit, insbesondere eine wiederaufladbare Akkumulatoreinheit, zu einer Energieversorgung. Zudem umfasst das Funktionsmodul zumindest eine Energieschnittstelle zu einer Wiederaufladung der Energiespeichereinheit. Die Energieschnittstelle kann kabellos, insbesondere als induktive Energieschnittstelle, oder kabelgebunden ausgebildet sein. Es ist zudem denkbar, dass das Funktionsmodul eine Energieerzeugungseinheit zu einer Energieerzeugung aufweist, die zu einer Energieversorgung von elektrischen Komponenten des Funktionsmoduls und/oder zu einer Energiespeisung der Energiespeichereinheit vorgesehen ist. Die Energieerzeugungseinheit ist bevorzugt dazu vorgesehen, aus regenerativen Energiequellen, aus einer Bewegung und/oder aus weiteren mechanischen und/oder elektrischen Ereignissen Energie zu gewinnen. Die Energieerzeugungseinheit kann als Solareinheit, als Windkrafteinheit, als Piezoeinheit o. dgl. ausgebildet sein.

Die Kommuntkationseinheit/en des mobilen Funktionsmoduls und/oder der Gebäudeinfrastrukturvorrichtung sind/ist vorzugsweise als kabellose Kommunikationseinheit/en ausgebildet. Hierbei können/kann die Kommunikationseinheil/en als WLAN-Kommunikationseinheit, als Bluetooth-Kommunikationseinheit, als Funk-Kommunikationseinheit, als RFID-Kommunikationseinheit, als NFC-Einheit, als Infrarot-Kommunikationseinheit, als Mobilfunknetz-Kommunikationseinheit, als Zigbee-Kommunikationseinheit o. dgl. ausgebildet sein. Besonders bevorzugt sind/ist die Kommuntkationseinheit/en des mobilen Funktionsmoduls und/oder der Gebäudeinfrastrukturvorrichtung zu einer bidirektionalen Datenübertragung vorgesehen. In einer alternativen Ausgestaltung sind/ist die Kommunikationseinheit/en des mobilen Funktionsmoduls und/oder der Gebäudeinfrastrukturvorrichtung als kabelgebundene Kommunikationseinheil/en ausgebildet, wie beispielsweise als LAN-Kommunikationseinheit, als USB-Kommunikationseinheit, als Powerline-Kommunikationseinheit, als CAN-Bus-Kommunikationseinheit, als Ethernet-Kommunikationseinheit, als twisted pair Kabel-Kommunikationseinheit (CAT5 oder CAT6) o. dgl. Es ist jedoch auch denkbar, dass die Kommuntkationseinheit/en des mobilen Funktionsmoduls und/oder der Gebäudeinfrastrukturvorrichtung alternativ zu einer kabellosen oder zu einer kabelgebundenen Kommunikation, zu einer kabellosen und zu einer kabelgebunden Kommunikation vorgesehen sindfist. Vorzugsweise erfolgt eine Kommunikation zwischen der Kommunikationseinheit des Funktionsmoduls und der Kommunikationseinheit der Gebäudeinfrastrukturvorrichtung kabellos. Die Begriffe "übermitteln", "übertragen" und/oder "kommunizieren" sollen hier insbesondere ein Senden und/oder ein Empfangen von Daten, insbesondere elektronischen Daten, definieren. Mittels der Kommunikation zwischen dem Funktionsmodul und der Gebäudeinfrastrukturvorrichtung können beispielsweise arbeitsfallreievante Daten, wie beispielsweise eine Arbeitszeit mit einem bestimmten Werkzeug, um z.B. die zulässige Expositionsdauer von Vibrationen einer bestimmten Maschine auf einen Bediener zu überwachen und/oder zu protokollieren, wie beispielsweise Notfalldaten und/oder Auslösedaten von einer Totmann-Überwachungseinheit, wie beispielsweise eine Information an eine Werksfeuerwehr, wenn eine gefährliche Arbeit in einem als sensibel gekennzeichneten Bereich begonnen wird, um beispielsweise eine Empfindlichkeit eines Brandmelders/einer Brandmeldeeinheit zu reduzieren oder sogar für einen Zeitraum einer Durchführung der gefährlichen Arbeiten abzuschalten o. dgl., übertragen werden.

Unter einer "Gebäudeinfrastrukturvorrichtung" soll hier insbesondere eine Vorrichtung verstanden werden, die zu einer Überwachung, zu einer Steuerung, zu einer Versorgung (Energieversorgung, Wasserversorgung o. dgl.), zu einer Informationsaufnahme, zu einer Informationsausgabe und/oder zu einer Beleuchtung eines Gebäudes und/oder eines das Gebäude zumindest teilweise umgebenden Geländes vorgesehen ist. Die Gebäudeinfrastrukturvorrichtung kann als Signalgeber (optisch, akustisch und/oder haptisch), als Kamera, als Bewegungsmelder, als Beschallungsvorrichtung, als Zugangsvorrichtung (elektrisches Schließsystem, elektrisches Zutrittskontrollsystem, Codeeingabeeinheit, Statusanzeigeeinheit o. dgl.), als Brand- und/oder Rauchmeldevorrichtung, als Gasüberwachungsvorrichtung, als Beleuchtungsvorrichtung, als Datenübertragungsvorrichtung (Router, Funksystem, Teil einer Telefonanlage, Türsprechanlage) o. dgl. ausgebildet sein. Bevorzugt ist die Gebäudeinfrastrukturvorrichtung als Gebäudesicherheits- und/oder Gebäudebrandmeldevorrichtung ausgebildet. Es ist jedoch auch denkbar, dass die Gebäudeinfrastrukturvorrichtung als eine andere, einem Fachmann als sinnvoll erscheinende Vorrichtung ausgebildet ist. Vorzugsweise ist die Gebäudeinfrastrukturvorrichtung mittels eines Netzwerks mit mehreren gleich oder unterschiedlich ausgebildeten Gebäudeinfrastrukturvorrichtungen vernetzt, insbesondere über eine zentrale Recheneinheit, die beispielsweise von der Steuer- oder Regeleinheit gebildet sein kann. Besonders bevorzugt ist das Netzwerk ein Teil eines Gebäudesicherheitssystems und/oder eines Gebäudebrandmeldesystems. Innerhalb des Netzwerks, mittels dessen die Gebäudeinfrastrukturvorrichtung vernetzt ist, ist es vorzugsweise vorgesehen, eine Übermittlung von elektronischen Daten kabellos und/oder kabelgebunden zu realisieren. Die Gebäudeinfrastrukturvorrichtung kann kabelgebunden und/oder kabellos an das Netzwerk angeschlossen sein. Vorzugsweise erfolgt eine Kommunikation zwischen der Kommunikationseinheit der Gebäudeinfrastrukturvorrichtung und dem Netzwerk des Gebäudesicherheitssystems und/oder des Gebäudebrandmeldesystems kabelgebunden. Die Kommunikationseinheit der Gebäudeinfrastrukturvorrichtung ist bevorzugt zu einer Kommunikation mit der Kommunikationseinheit des Funktionsmoduls und zu einer Kommunikation mit dem Netzwerk des Gebäudesicherheitssystems und/oder des Gebäudebrandmeldesystems vorgesehen. Es ist jedoch auch denkbar, dass die Gebäudeinfrastrukturvorrichtung zumindest zwei getrennte Kommunikationseinheiten aufweist, wobei eine der Kommunikationseinheiten zur Kommunikation mit dem Funktionsmodul vorgesehen ist und eine der Kommunikationseinheiten zur Kommunikation mit dem Netzwerk des Gebäudesicherheitssystems und/oder des Gebäudebrandmeldesystems vorgesehen ist. Das Netzwerk des Gebäudesicherheitssystems und/oder des Gebäudebrandmeldesystems kann ein Feldbusnetzwerk, ein LAN, ein Funknetzwerk, wie beispielsweise ein WLAN, oder ein anderes, einem Fachmann als sinnvoll erscheinendes Netzwerk sein. Eine Kommunikation zwischen dem Funktionsmodul und der Gebäudeinfrastrukturvorrichtung kann im Netzwerk des Gebäudesicherheitssystems und/oder des Gebäudebrandmeldesystems erfolgen und/oder in einem separaten Kommunikationsnetzwerk erfolgen, das insbesondere parallel zum Netzwerk des Gebäudesicherheitssystems und/oder des Gebäudebrandmeldesystems betreibbar ist. Bei einer Kommunikation des Funktionsmoduls und der Gebäudeinfrastrukturvorrichtung in einem separaten Kommunikationsnetzwerk kann vorteilhaft sichergestellt werden, dass eine Funktionsweise des Netzwerks des Gebäudesicherheitssystems und/oder des Gebäudebrandmeldesystems zumindest weitestgehend unbeeinflusst von einer Funktionsweise des separaten Kommunikationsnetzwerks ist. Zudem kann vorteilhaft bei einer Kommunikation des Funktionsmoduls und der Gebäudeinfrastrukturvorrichtung in einem separaten Kommunikationsnetzwerk ein Zugriff von Unbefugten, insbesondere Hackern, bei einem Eindringen in das separate Kommunikationsnetzwerk auf das Netzwerk des Gebäudesicherheitssystems und/oder des Gebäudebrandmeldesystems zumindest weitestgehend vermieden werden.

Unter einer "Steuer- oder Regeleinheit " soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Die Steuer- oder Regeleinheit ist vorzugsweise zumindest dazu vorgesehen, elektronische Daten, insbesondere zwischen dem Funktionsmodul und der Gebäudeinfrastrukturvorrichtung übertragene elektronische Daten, zu speichern, zu verwalten, zu verarbeiten und/oder weiterzuleiten. Bevorzugt ist die Steuer- oder Regeleinheit zumindest dazu vorgesehen, zumindest weitestgehend unabhängig von Kenngrößen einer globalen Standortbestimmungsvorrichtung (GPS-Vorrichtung, GLONASS-Vorrichtung, Galileo-Vorrichtung, Beidou-Vorrichtung) anhand einer Auswertung einer Kommunikation zwischen dem Funktionsmodul und der Gebäudeinfrastrukturvorrichtung zumindest auf eine Position des Funktionsmoduls zu schließen, insbesondere auf eine Position innerhalb eines Gebäudes oder innerhalb eines das Gebäude zumindest teilweise umgebenden Geländes, das zumindest weitestgehend gegen einen Empfang und/oder eine Übertragung von Daten einer globalen Standortbestimmungsvorrichtung, wie beispielsweise einer GPS-Vorrichtung, abgeschirmt ist. Die Steuer- oder Regeleinheit kann in das Funktionsmodul, in die Gebäudeinfrastrukturvorrichtung oder in ein/e andere/s, einem Fachmann als sinnvoll erscheinende/s Element oder Einheit integriert sein, wie beispielsweise eine zentrale Recheneinheit des Gebäudesicherheitssystems und/oder des Gebäudebrandmeldesystems o.dgl.

Der Ausdruck "gegenstandsspezifische Kenngröße" soll hier insbesondere eine Kenngröße definieren, die einen Gegenstand definiert, insbesondere hinsichtlich zumindest einer Abmessung, einer Beschaffenheit, eines Zustands, eines Funktionsspektrums, einer Gegenstandsart o. dgl. Die gegenstandsspezifische Kenngröße kann als Identifikationskenngröße (MAC-Adresse, IP-Adresse, Gegenstandsnummer, Inventurnummer o. dgl.), als Höhe, als Breite, als Tiefe, als Volumen, als Materialart, als Materialeigenschaft, als Zustand, wie beispielsweise neuwertig, gebraucht, als Betriebsparameter zu einem Betrieb des Gegenstands o. dgl. ausgebildet sein. Unter einer "bedienerspezifischen Kenngröße" soll hier insbesondere eine Kenngröße verstanden werden, die zumindest einen Vitalwert des Individuums definiert, eine Kenngröße, die auf das Individuum einwirkt, und/oder eine Kenngröße, die abhängig ist von einem Verhalten des Individuums, wie beispielsweise ein Bewegungsverhalten, ein Schlafverhalten, einen Tagesablauf, einen Arbeitsablauf o. dgl. Die bedienerspezifische Kenngröße kann als bedienerspezifische Kleidungsstückbelastungsart, als Geräusch- und/oder Schwingungsbelastung, als Puls, als Körpertemperatur, als Müdigkeitskenngröße, als Ausrichtungskenngröße, als Bewegungskenngröße oder als eine andere, einem Fachmann als sinnvoll erscheinende bedienerspezifische Kenngröße ausgebildet sein. Unter einer "umgebungsspezifischen Kenngröße" soll hier insbesondere eine Kenngröße verstanden werden, die zumindest eine das Funktionsmodul umgebende Umwelt definiert. Hierbei kann die umgebungsspezifische Kenngröße als Umgebungsdruck, als Umgebungstemperatur, als Umgebungsschallpegel, als Umgebungsgaskenngröße, als UmgebungsspannungskenngrÖße, als Umgebungsfeuchtigkeitskenngröße, als Umgebungssäure- und/oder Umgebungsbasenkenngröße oder als eine andere, einem Fachmann als sinnvoll erscheinende umgebungsspezifische Kenngröße ausgebildet sein.

Darunter, dass "das Funktionsmodul dazu vorgesehen ist, zumindest eine gegenstandsspezifische Kenngröße, eine bedienerspezifische Kenngröße und/oder eine umgebungsspezifische Kenngröße zu erfassen" soll hier insbesondere verstanden werden, dass die KenngrÖße/n infolge einer sensorischen Erfassung, infolge einer manuellen Eingabe, wie beispielsweise mittels einer Tastatur, und/oder infolge einer elektronischen Eingabe, wie beispielsweise mittels NFC, mittels RFID, mittels USB o. dgl., zumindest in einer Speichereinheit des Funktionsmoduls ablegbar sind. Die in der Speichereinheit abgelegte/n Kenngröße/n ist/sind vorzugsweise mittels der Kommunikationseinheit des Funktionsmoduls zumindest auf die Gebäudeinfrastrukturvorrichtung übertragbar. Die auf die Gebäudeinfrastrukturvorrichtung übertragbare/n Kenngröße/n ist/sind infolge der Anbindung der Gebäudeinfrastrukturvorrichtung an das Netzwerk des Gebäudesicherheitssystems und/oder des Gebäudebrandmeldesystems an weitere Netzwerkstellen des Netzwerks und/oder über das Netzwerk an weitere externe Stellen übermittelbar. Die übertragene/n Kenngröße/n sind bevorzugt von der Steuer- oder Regeleinheit des erfindungsgemäßen Systems auswertbar. Die Steuer- oder Regeleinheit ist vorzugsweise zumindest datenübertragungstechnisch mit dem Netzwerk des Gebäudesicherheitssystems und/oder des Gebäudebrandmeldesystems verbunden. Bevorzugt ist die Steuer- oder Regeleinheit zumindest datenübertragungstechnisch mit zumindest einem weiteren Netzwerk, insbesondere dem Internet, verbunden, wie beispielsweise mittels eines Gateways, mittels eines Routers o. dgl.

Durch die erfindungsgemäße Ausgestaltung des Systems kann vorteilhaft eine zuverlässige Zuordnung erfolgen. Zudem kann vorteilhaft eine zentrale Verwaltung, Überwachung und/oder Steuerung in Abhängigkeit einer zuverlässigen Zuordnung des Gegenstands zu dem Individuum erfolgen. Weiterhin kann ein Datenaustausch von Kenngrößen von Gegenständen und/oder von Individuen mit zumindest einer vorhandenen Gebäudeinfrastrukturvorrichtung, insbesondere Brand- und/oder Rauchmelder, ermöglicht werden, wobei übertragene Daten ganz besonders vorteilhaft zu einer Überwachung, zu einer Steuerung und/oder zu einer Verwaltung der Gegenstände und/oder der Individuen nutzbar sind. Zudem kann vorteilhaft eine Erfassung von Kenngrößen realisiert werden, die zu einer Informationsausgabe, zu einer Überwachung, zu einer Steuerung und/oder zu einer Verwaltung nutzbar sind. Ferner kann vorteilhaft eine zentrale Verarbeitung von sich individuell in einem Gebäude und/oder auf einem das Gebäude umgebenden Gelände bewegende Gegenstände und/oder Individuen erreicht werden, wobei infolge der zentralen Verarbeitung vorteilhaft in Abhängigkeit von erfassten und/oder übertragenen Kenngrößen Steuerungsvorgänge, Überwachungsvorgänge, Verwaltungsvorgänge o. dgl. einleitbar sind. Besonders vorteilhaft kann mit der erfindungsgemäßen Ausgestaltung auf ein bereits vorhandenes Gebäudesicherheitssystem und/oder Gebäudebrandmeldesystem zurückgegriffen werden, wobei das Gebäudesicherheitssystem und/oder das Gebäudebrandmeldesystem vorteilhaft zu einer Datenkommunikation zu einer Überwachung, Verwaltung und/oder zu einem Schutz nutzbar ist.

Des Weiteren wird vorgeschlagen, dass das Funktionsmodul zumindest eine Sensoreinheit aufweist, die dazu vorgesehen ist, die zumindest eine gegenstandsspezifische Kenngröße, bedienerspezifische Kenngröße und/oder umgebungsspezifische Kenngröße zumindest teilweise automatisch zu erfassen. Der Ausdruck "zumindest teilweise automatisch" soll hier insbesondere eine Durchführung und/oder ein Starten einer Funktion eines Elements und/oder einer Einheit definieren, die und/oder das zumindest weitestgehend unabhängig ist von einer manuellen Befehlseingabe, insbesondere unabhängig ist von einer manuellen Befehlseingabe eines Individuums zur Durchführung und/oder zum Starten einer Kenngrößenerfassung. Bevorzugt werden/wird die zumindest eine erfasste gegenstandsspezifische Kenngröße, die zumindest eine erfasste bedienerspezifische Kenngröße und/oder die zumindest eine erfasste umgebungsspezifische Kenngröße an die Steuer- oder Regeleinheit zu einer Auswertung, Weiterleitung und/oder Verarbeitung übertragen. Eine Übertragung von zumindest einer erfassten gegenstandsspezifischen Kenngröße, zumindest einer erfassten bedienerspezifischen Kenngröße und/oder zumindest einer erfassten umgebungsspezifischen Kenngröße an die Steuer- oder Regeleinheit zu einer Auswertung, Weiterleitung und/oder Verarbeitung kann in Abhängigkeit eines Anfragebefehls der Steuer- oder Regeleinheit, in Abhängigkeit eines Ablaufens eines vorbestimmten Zeitraums und/oder in Abhängigkeit eines eingetretenen Ereignisses, wie beispielsweise ein Nichtvorhandensein eines vorgeschriebenen Gegenstands bei einem Betreten eines Gebäudes oder eines das Gebäude zumindest teilweise umgebenden Geländes, ein Erkennen einer Gefährdung und/oder einer Störung des Gegenstands und/oder ein Erkennen einer Gefährdung des Individuums, an dem das Funktionsmoduls angeordnet ist, o. dgl. erfolgen.

Eine teilweise automatische Erfassung der zumindest einen gegenstandsspezifischen Kenngröße, bedienerspezifischen Kenngröße und/oder umgebungsspezifische Kenngröße kann in Abhängigkeit eines Ablaufens eines vorbestimmten Zeitraums, anhand eines Erfassungsalgorithmus und/oder anhand von einem insbesondere zentral über die Steuer- oder Regeleinheit abgebbaren Erfassungsbefehl erfolgen. Die Sensoreinheit umfasst zumindest ein Sensorelement zur zumindest teilweise automatischen Erfassung der zumindst einen gegenstandsspezifischen Kenngröße, bedienerspezifischen Kenngröße und/oder umgebungsspezifischen Kenngröße. Die Sensoreinheit kann eine Vielzahl an unterschiedlichen und/oder gleichen Sensorelementen zur zumindest teilweise automatischen Erfassung der zumindest einen gegenstandsspezifischen Kenngröße, bedienerspezifischen Kenngröße und/oder umgebungsspezifischen Kenngröße aufweisen. Bevorzugt umfasst die Sensoreinheit zumindest ein Bewegungssensorelement, das dazu vorgesehen ist, zumindest eine von einer Beschleunigung verschiedene Bewegungskenngröße zu erfassen. Vorzugsweise umfasst die Sensoreinheit zumindest ein Beschleunigungssensorelement, das dazu vorgesehen ist, zumindest eine Beschleunigungskenngröße zu erfassen. Das Beschleunigungssensorelement kann hierbei als mehrachsiges Beschleunigungssensorelement, insbesondere als dreiachsiges Beschleunigungssensorelement, als Drehratensensorelement, als piezoelektrisches Beschleunigungssensorelement, als Beschleunigungssensorelement aus einem mikroelektro-mechanischen System (MEMS) oder als ein anderes, einem Fachmann als sinnvoll erscheinendes Beschleunigungssensorelement ausgebildet sein.

Vorteilhafterweise umfasst die Sensoreinheit zumindest ein Temperatursensorelement, das dazu vorgesehen ist, zumindest eine Temperaturkenngröße zu erfassen. Ferner umfasst die Sensoreinheit vorzugsweise zumindest ein als Umgebungstemperatursensorelement ausgebildetes Temperatursensorelement, das dazu vorgesehen ist, eine Umgebungstemperatur, insbesondere eine Umgebungslufttemperatur, zu erfassen. Ferner umfasst die Sensoreinheit bevorzugt zumindest ein Vitalfunktionssensorelement, das dazu vorgesehen ist, zumindest eine Vitalkenngröße des Individuums zu erfassen. Die Vitalkenngröße kann beispielsweise ein Blutwert, ein Puls, ein Herzschlag, eine Körperflüssigkeitszusammensetzung des Individuums o. dgl. sein. Vorzugsweise umfasst die Sensoreinheit zumindest ein als Köpertemperatursensorelement ausgebildetes Vitalfunktionssensorelement, das dazu vorgesehen ist, eine Körpertemperatur des Individuums, an dem das Funktionsmodul angeordnet ist, zu erfassen.

Des Weiteren umfasst die Sensoreinheit bevorzugt zumindest ein Drucksensorelement, das dazu vorgesehen ist, zumindest eine Druckkenngröße zu erfassen. Zudem weist die Sensoreinheit bevorzugt zumindest ein Ortungssensorelement auf, das dazu vorgesehen ist, zumindest eine Positionskenngröße, insbesondere zumindest eine globale Positionskenngröße zu erfassen. Die Sensoreinheit umfasst vorzugsweise zumindest ein als GPS-Sensorelement ausgebildetes Sensorelement, mittels dessen eine globale Position erfassbar ist. Es ist jedoch auch denkbar, dass die Sensoreinheit ein anderes, einem Fachmann als sinnvoll erscheinendes Sensorelement zu einer Erfassung einer als globalen Position ausgebildeten Positionskenngröße aufweist, wie beispielsweise ein Kompass-Ortungssensorelement, ein Galileo-Ortungssensorelement, ein GLONASS-Ortungssensorelement, ein Beidou-Ortungssensorelement o. dgl. Die Sensoreinheit kann alternativ oder zusätzlich zumindest ein weiteres Sensorelement oder eine Vielzahl an weiteren Sensorelementen aufweisen, die zu einer zumindest teilweise automatischen Erfassung von der zumindest einen gegenstandsspezifischen Kenngröße, bedienerspezifischen Kenngröße und/oder umgebungsspezifischen Kenngröße vorgesehen ist/sind. Mittels der erfindungsgemäßen Ausgestaltung kann vorteilhaft eine zuverlässige Erfassung von Kenngrößen ermöglicht werden. Somit kann vorteilhaft eine zuverlässige Erfassung von einer Vielzahl von Kenngrößen ermöglicht werden, die zu einer zumindest teilweise automatischen Überwachung, Verwertung und/oder Verwaltung mittels des Systems nutzbar sind.

Ferner wird vorgeschlagen, dass die Steuer- oder Regeleinheit zumindest eine Auswertefunktion aufweist, die dazu vorgesehen ist, in Abhängigkeit von den zwischen dem Funktionsmodul und der Gebäudeinfrastrukturvorrichtung übertragenen Daten auf einen Vitalzustand des Individuums, insbesondere eines Bedieners einer tragbaren Werkzeugmaschine oder eines Trägers eines Sicherheitskleidungsstücks, auf eine Belastung des Individuums und/oder auf ein Gefährdungspotential des Individuums zu schließen. Bevorzugt ist die Auswertefunktion zudem dazu vorgesehen, in Abhängigkeit von den zwischen dem Funktionsmodul und der Gebäudeinfrastrukturvorrichtung übertragenen Daten auf einen Betriebszustand des Gegenstands, an dem das Funktionsmodul angeordnet ist, zu schließen. Die Belastung des Individuums kann hierbei als eine Arbeitsdauer, eine Dauer einer Schwingung, die während einer Tätigkeit auf den Bediener einer Werkzeugmaschine einwirkt, eine körperliche Anstrengung, wie beispielsweise ein Heben einer großen Last, ein Treppensteigen, ein Zurücklegen einer langen Wegstrecke, oder eine andere, einem Fachmann als sinnvoll erscheinende Belastung des Individuums ausgebildet sein. Beispielsweise kann mittels der Sensoreinheit des Funktionsmoduls, das an dem Individuum angeordnet ist, erkannt werden, dass das Individuum beispielsweise gestürzt ist und sich nicht mehr bewegt. Mittels der Auswertefunktion kann vorzugsweise ausgewertet werden, ob eine Notfallsituation vorliegt. Zudem kann, insbesondere mittels der Steuer- oder Regeleinheit automatisch initiiert, ein Hilfsdienst informiert werden, der zum Individuum geführt werden kann, insbesondere infolge einer Positionsbestimmung des Funktionsmoduls mittels einer Auswertung von einer Kommunikation zwischen dem Funktionsmodul und der Gebäudeinfrastrukturvorrichtung durch die Steuer- oder Regeleinheit und/oder mittels einer Auswertung von erfassten Kenngrößen des Ortungssensorelements. Mittels der erfindungsgemäßen Ausgestaltung können vorteilhaft Gefahrensituationen erkannt werden, und das Individuum kann vorteilhaft vor Gefahren geschützt werden.

Zudem wird vorgeschlagen, dass die Steuer- oder Regeleinheit zumindest eine Zugangskontrollfunktion aufweist, die dazu vorgesehen ist, in Abhängigkeit von den zwischen dem Funktionsmodul und der Gebäudeinfrastrukturvorrichtung übertragenen Daten einen Zugang des Gegenstands und/oder des Individuums zu einem Arbeitsbereich oder zu einem Raum zu überwachen, freizugeben oder zu sperren. Mittels der Zugangskontrollfunktion ist beispielsweise überwachbar, zu welchem Raum und/oder Bereich eines Arbeitsareals das Individuum und/oder der Gegenstand Zutritt hat und welche Arbeitserlaubnis, insbesondere in Bezug auf Sicherheitseinweisungen, das Individuum aufweist oder aufweisen muss. Infolge der Zugangskontrollfunktion ist beispielsweise ein Betreten eines Bereichs eines Arbeitsareals, in dem gefährliche Arbeiten durchführbar sind, erfassbar, und anhand der Zugangskontrollfunktion kann entschieden werden, ob das Individuum eine hinsichtlich der Gefährdung ausreichende Ausbildung aufweist und/oder eine entsprechende Sicherheitskleidung trägt. Mittels der erfindungsgemäßen Ausgestaltung kann vorteilhaft eine einfache Zugangskontrolle ermöglicht werden. Zudem kann vorteilhaft ein Vorhandensein einer für den Raum oder den Bereich nötigen Ausbildung und/oder einer zwingend zu tragenden Sicherheitskleidung überwacht werden und in Abhängigkeit des Vorhandenseins ein Zugang erlaubt werden oder bei einem Nichtvorhandensein ein Zugang untersagt werden und eine entsprechende Informationsausgabe erfolgen, die auf das Nichtvorhandensein hinweist und eine Handlungsanweisung darstellen kann.

Des Weiteren wird vorgeschlagen, dass die Steuer- oder Regeleinheit dazu vorgesehen ist, in Abhängigkeit von den zwischen dem Funktionsmodul und der Gebäudeinfrastrukturvorrichtung übertragenen Daten mittels des Funktionsmoduls aktiv in eine Steuerung und/oder Regelung eines als tragbare Werkzeugmaschine ausgebildeten Gegenstands, an dem das Funktionsmodul angeordnet ist, einzugreifen. Wird beispielsweise eine Information über ein Vorliegen eines rutschigen Untergrunds in einem Bereich eines Gebäudes oder eines das Gebäude zumindest teilweise umgebenden Geländes von der Gebäudeinfrastrukturvorrichtung an das Funktionsmodul übertragen, ist mittels einer Kommunikation zwischen dem als tragbare Werkzeugmaschine ausgebildeten Gegenstand und dem Funktionsmodul automatisch eine Sicherheitsfunktion der tragbaren Werkzeugmaschine, wie beispielsweise eine Kick-Back-Funktion bei einem Winkelschleifer, aktivierbar oder einstellbar. Ferner ist es denkbar, dass ein Gassensorelement der Sensoreinheit des Funktionsmoduls beispielsweise bei einer funkenbildenden Bearbeitung eines Werkstücks ein Vorhandensein eines hochentzündlichen Gases erfasst, woraufhin beispielsweise die tragbare Werkzeugmaschine automatisch deaktivierbar ist, mittels einer Ausgabeeinheit des Funktionsmoduls und/oder der Gebäudeinfrastrukturvorrichtung eine Warnung ausgebbar ist und/oder das Vorhandensein des hochentzündlichen Gases in einem Bereich des Arbeitsareals ist an die Steuer- oder Regeleinheit übermittelbar, um entsprechende Gegenmaßnahmen einzuleiten und/oder weitere Individuen zu warnen. Mittels der erfindungsgemäßen Ausgestaltung kann vorteilhaft eine zuverlässige Gefahrenvermeidung erreicht werden und somit vorteilhaft der Gegenstand und/oder das Individuum vor Beschädigungen bzw. Verletzungen geschützt werden.

Ferner wird vorgeschlagen, dass die Steuer- oder Regeleinheit zumindest eine Überwachungsfunktion aufweist, die dazu vorgesehen ist, in Abhängigkeit von den zwischen dem Funktionsmodul und der Gebäudeinfrastrukturvorrichtung übertragenen Daten ein Vorhandensein von zumindest einem vorgeschriebenen Sicherheitskleidungsstück und/oder einer Kombination von vorgeschriebenen Sicherheitskleidungsstücken zu überwachen. Bevorzugt ist die Überwachungsfunktion dazu vorgesehen, in Abhängigkeit von Sicherheits- und/oder Betriebsbereichsregeln eine arbeitsbereichs- und/oder arbeitseinsatzbedingte Sicherheitskleidungsstückkombination zu überwachen. Somit ist vorteilhaft eine automatische Überwachung einer durch beispielsweise Arbeitsbereichs- und/oder Sicherheitsregeln vorgegebene Tragepflicht von Sicherheitskleidungsstücken realisierbar.

Zudem wird vorgeschlagen, dass die Steuer- oder Regeleinheit zumindest eine Ausgabefunktion aufweist, die dazu vorgesehen ist, in Abhängigkeit von den zwischen dem Funktionsmodul und der Gebäudeinfrastrukturvorrichtung übertragenen Daten zumindest eine Information mittels einer Ausgabeeinheit des Funktionsmoduls und/oder der Gebäudeinfrastrukturvorrichtung auszugeben. Die Ausgabeeinheit kann hierbei als haptische, als akustische und/oder als optische Ausgabeeinheit ausgebildet sein. Bevorzugt umfasst die Ausgabeeinheit zumindest ein Ausgabeelement, das als Display, als Lautsprecher o. dgl. ausgebildet ist. Es ist jedoch auch denkbar, dass die Steuer- oder Regeleinheit infolge einer Anordnung des Funktionsmoduls an dem Gegenstand eine Ausgabeeinheit des Gegenstands zu einer Ausgabe einer Information in Abhängigkeit von den zwischen dem Funktionsmodul und der Gebäudeinfrastrukturvorrichtung übertragenen Daten nutzt. Mittels der erfindungsgemäßen Ausgestaltung kann vorteilhaft dem Individuum eine Information ausgegeben werden. Somit kann vorteilhaft das Individuum beispielsweise vor einer Gefahrensituation gewarnt werden. Zudem können vorteilhaft andere Individuen, die sich im Umfeld des Individuums aufhalten, ebenfalls vorteilhaft beispielsweise vor einer Gefahrensituation gewarnt werden. Ferner ist beispielsweise ein Vorhandensein einer Gefährdung infolge einer Kommunikation zwischen dem Funktionsmodul und der Gebäudeinfrastrukturvorrichtung vorteilhaft zeitnah an eine zentrale Stelle übermittelbar. Es kann vorteilhaft zentral eine Einleitung von Maßnahmen zur Beseitigung der Gefährdung ermöglicht werden.

Des Weiteren wird vorgeschlagen, dass die Steuer- oder Regeleinheit zumindest eine Berechtigungsfunktion aufweist, die dazu vorgesehen ist, in Abhängigkeit von den zwischen dem Funktionsmodul und der Gebäudeinfrastrukturvorrichtung übertragenen Daten zumindest eine Berechtigung einer Nutzung des Gegenstands, an dem das Funktionsmodul angeordnet ist, vorzugeben. Bevorzugt ist die Berechtigungsfunktion dazu vorgesehen, in Abhängigkeit einer an die Steuer- oder Regeleinheit übermittelten Arbeitseinweisung, einer nachgewiesenen und mittels der Steuer- oder Regeleinheit überprüften Ausbildung des Individuums o. dgl. eine Berechtigung einer Nutzung des Gegenstands, an dem das Funktionsmodul angeordnet ist, vorzugeben. Mittels der erfindungsgemäßen Ausgestaltung kann vorteilhaft sichergestellt werden, dass der Gegenstand, insbesondere eine tragbare Werkzeugmaschine, sicher von dem Individuum nutzbar und/oder bedienbar ist. Es kann somit eine hohe Arbeitssicherheit realisiert werden, die vorteilhafterweise zentral überwachbar und/oder protokollierbar ist.

Zudem wird vorgeschlagen, dass die Kommunikationseinheit der Gebäudeinfrastrukturvorrichtung dazu vorgesehen ist, elektronische Daten an eine externe Einheit, die verschieden vom Funktionsmodul ausgebildet ist, zu übertragen. Die externe Einheit kann beispielsweise als Smartphone, als Laptop, als PC, als Tablet-PC, als Cloud, als Notfallzentrale, als Servicezentrale, als Wetterzentrale, insbesondere als Unwetterzentrale, o. dgl. ausgebildet sein, die mittels eines Zugangspunkts des Netzwerks, insbesondere mittels eines Gateways, mit dem Netzwerk, mit dem die Gebäudeinfrastrukturvorrichtung vernetzt ist, verbunden ist. Mittels der erfindungsgemäßen Ausgestaltung kann vorteilhaft eine Weitergabe von Daten an und/oder ein Empfang von Daten von der externen Einheit realisiert werden, die zu einer Steuerung, Verwaltung, Verwertung und/oder Steuerung einer Überwachungsfunktion und/oder einer Schutzfunktion des Gegenstands und/oder des Individuums innerhalb des Netzwerks nutzbar sind.

In zumindest einem Ausführungsbeispiel wird vorgeschlagen, dass das mobile Funktionsmodul als autonomes Fortbewegungsgerät ausgebildet ist oder an einem autonomen Fortbewegungsgerät angeordnet ist. Unter einem "autonomen Fortbewegungsgerät" soll hier insbesondere ein Gerät verstanden werden, das sich selbsttätig in einem Bereich und/oder in einer Umgebung fortbewegt, orientiert oder navigiert, insbesondere sich nach einem Anlernprozess selbsttätig in einem Bereich und/oder in einer Umgebung fortbewegt und/oder sich orientiert. Der Ausdruck "selbsttätig fortbewegen und/oder orientieren" soll hier insbesondere eine Fortbewegung, eine Orientierung und/oder Navigation des Fortbewegungsgeräts, insbesondere nach einem Anlernprozess, ohne einen menschlichen Eingriff definieren. Vorzugsweise bewegt sich das autonome Fortbewegungsgerät nach einem von einem Bediener mit dem autonomen Fortbewegungsgerät durchgeführten Anlernprozess selbsttätig in einem Bereich und/oder in einer Umgebung fort bzw. orientiert sich selbsttätig in einem Bereich und/oder in einer Umgebung. Besonders bevorzugt ist das autonome Fortbewegungsgerät dazu vorgesehen, eine Fläche abzufahren und insbesondere die Fläche zu bearbeiten, wie beispielsweise zu kehren, abzusaugen, zu reinigen. Es sind verschiedene, dem Fachmann als sinnvoll erscheinende Ausgestaltungen des autonomen Fortbewegungsgeräts denkbar, wie beispielsweise als autonome Kehrmaschine, als autonomer Staubsauger, als autonomes Flurförderfahrzeug o. dgl. Das autonome Fortbewegungsgerät kann einen Kettenantrieb, einen Radantrieb, einen Magnetschwebeantrieb, einen Luftkissenantrieb oder einen anderen, einem Fachmann als sinnvoll erscheinenden Antrieb aufweisen.

Es ist denkbar, dass in Abhängigkeit von einer Kommunikation des mobilen Funktionsmoduls, das insbesondere als autonomes Fortbewegungsgerät ausgebildet ist oder das an einem autonomen Fortbewegungsgerät angeordnet ist, und der Gebäudeinfrastrukturvorrichtung ein Bearbeitungsprozess des autonomen Fortbewegungsgeräts Steuer- und/oder regelbar ist. Beispielsweise ist es denkbar, dass ein Bearbeitungsprozess in Abhängigkeit von einer Anwesenheit von Mitarbeitern in einem Gebäude und/oder auf einem das Gebäude zumindest teilweise umgebenden Gelände Steuer- und/oder regelbar ist. Beispielsweise ist es denkbar, dass ein als autonome Kehrmaschine und/oder als autonomer Staubsauger ausgebildetes autonomes Fortbewegungsgerät einen Reinigungsprozess in Abhängigkeit von einer Anwesenheit von Mitarbeitern in einem Gebäude und/oder auf einem das Gebäude zumindest teilweise umgebenden Gelände beginnt, startet oder fortsetzt. Weitere Steuer- und/oder Regelparameter sind ebenfalls denkbar, wie beispielsweise in Abhängigkeit von Wetterdaten, von einer Kommunikation von verschiedenen autonomen Fortbewegungsgeräten untereinander o. dgl.

Des Weiteren ist es denkbar, dass in Abhängigkeit von einer Kommunikation des mobilen Funktionsmoduls, das insbesondere als autonomes Fortbewegungsgerät ausgebildet ist oder das an einem autonomen Fortbewegungsgerät angeordnet ist, und der Gebäudeinfrastrukturvorrichtung eine Überwachungsfunktion realisierbar ist. Beispielsweise ist es denkbar, dass ein sich unberechtigt in einem Bereich aufhaltendes Individuum (Mensch oder Tier) und/oder Objekt von dem autonomen Fortbewegungsgerät erfasst/erkannt werden kann. Aus einer hinterlegten Entscheidungsmatrix kann das autonome Fortbewegungsgerät oder das mobile Funktionsmodul ableiten, welche Aktion durchzuführen ist oder es erfolgt eine Benachrichtigung einer Firmenzentrale (Sicherheitsdienst, Geschäftsführer o. dgl.), die darüber entscheidet, was zu tun ist und das autonome Fortbewegungsgerät entsprechend steuert und/oder regelt. Das autonome Fortbewegungsgerät kann sich auf das Individuum und/oder Objekt zubewegen, um dieses beispielsweise genauer zu begutachten und/oder zu verjagen (z.B. mittels zumindest eines akustischen Geräuschs, mittels zumindest eines visuellen Signals, mittels einer nichtverletzenden Verteidigungsvorrichtung, insbesondere Wasserstrahl, Elektroschock usw.) und/oder ein Bild des Individuums und/oder Objekts aufnehmen. Damit das Individuum und/oder das Objekt getroffen werden kann und/oder ein Bild davon aufgenommen werden kann, kann eine Infrarotsensoreinheit, eine Bewegungssensoreinheit o. dgl. des autonomen Fortbewegungsgeräts für eine Positionsermittlung des Individuums und/oder des Objekts genutzt werden.

Ferner ist es denkbar, dass das autonome Fortbewegungsgerät zu einer freien, individuellen Gestaltung eines Gebäudes und/oder eines das Gebäude zumindest teilweise umgebenden Geländes und/oder zu einem Transport von Objekten nutzbar ist, insbesondere in Abhängigkeit von einer Kommunikation des mobilen Funktionsmoduls, das insbesondere als autonomes Fortbewegungsgerät ausgebildet ist oder das an einem autonomen Fortbewegungsgerät angeordnet ist, und der Gebäudeinfrastrukturvorrichtung. Beispielsweise ist es denkbar, dass in einem virtuellen Gebäude- und/oder Geländeplan hinterlegbar ist, an welcher Position ein Objekt zu welchem Zeitpunkt angeordnet sein soll. Es können Dekorationsobjekte (Vase, Bild o. dgl.), Möbel (Schreibtisch, Stuhl o. dgl.), Güter, Verbrauchsmaterialien o. dgl. mittels des autonomen Fortbewegungsgeräts in Abhängigkeit von einer Kommunikation des mobilen Funktionsmoduls, das insbesondere als autonomes Fortbewegungsgerät ausgebildet ist oder das an einem autonomen Fortbewegungsgerät angeordnet ist, und der Gebäudeinfrastrukturvorrichtung transportiert werden. Mittels der erfindungsgemäßen Ausgestaltung kann eine vorteilhafte Erweiterung des Systems erreicht werden, die zu einer Arbeitserleichterung und/oder zu einer zentralen Verwaltung, Überwachung und/oder Steuerung von Individuen und/oder Objekten nutzbar ist.

Ferner wird vorgeschlagen, dass die Gebäudeinfrastrukturvorrichtung des Systems zumindest eine Sicherheitstechnikeinheit zu einer Erfassung und/oder Auswertung zumindest einer Sicherheitskenngröße umfasst. Unter einer "Sicherheitstechnikeinheif' soll hier insbesondere eine Einheit verstanden werden, die zu einer Erfassung, Verarbeitung und/oder Auswertung zumindest einer Kenngröße zu einer Überwachung eines Gebäudes und/oder eines das Gebäude zumindest teilweise umgebenden Geländes hinsichtlich einer Gefährdung, einer Zugangsberechtigung o. dgl. vorgesehen ist. Die Sicherheitstechnikeinheit kann beispielsweise als Rauchkonzentrationseinheit, als Kartenleseeinheit, als Lichtschrankeneinheit, als Kameraeinheit, als Bewegungserfassungseinheit, als Näherungserfassungseinheit o. dgl. ausgebildet sein. Mittels der erfindungsgemäßen Ausgestaltung kann vorteilhaft eine Erfassung von sicherheitsrelevanten Kenngrößen erfolgen, die vorzugsweise zu einem Schutz und/oder einer Überwachung des Gegenstands und/oder des Individuum nutzbar sind, insbesondere im Zusammenhang mit einer Nutzung der erfassten Kenngrößen in einem erfindungsgemäßen System.

Vorteilhafterweise weist die Sicherheitstechnikeinheit zumindest eine Sensoreinheit zumindest zu einer Erfassung zumindest einer Rauchkenngröße, einer Bewegungskenngröße, einer Annäherungskenngröße, einer Wärmekenngröße und/oder einer Zugangskenngröße auf. Die Sensoreinheit kann beispielsweise als Rauchsensoreinheit, insbesondere als optische Rauchsensoreinheit, als Bewegungssensoreinheit, als Annäherungssensoreinheit, als Wärmesensoreinheit und/oder als Zugangssensoreinheit, wie beispielsweise als Fingerabdrucksensoreinheit, als Karteniesesensoreinheit usw., oder als eine andere, einem Fachmann als sinnvoll erscheinende Sensoreinheit ausgebildet sein. Es ist beispielsweise denkbar, dass ein Eintreten des Individuums in ein Gebäude und/oder in ein das Gebäude zumindest teilweise umgebendes Gelände, beispielsweise mittels einer Annäherungssensoreinheit (Infrarotkameraeinheit, Bewegungssensoreinheit o. dgl.) erfassbar ist. Alternativ oder zusätzlich ist es auch denkbar, dass in Abhängigkeit einer Kommunikation des mobilen Funktionsmoduls und der Gebäudeinfrastrukturvorrichtung ein Eintreten des Individuums in ein Gebäude und/oder in ein das Gebäude zumindest teilweise umgebendes Gelände erfassbar ist. Ist das Individuum, beispielsweise infolge einer individuellen und mittels der Kommunikation übertragbaren Kennung, dem System bekannt, kann beispielsweise eine zuvor hinterlegte und/oder individuell anpassbare Prozedur zum Empfang des Individuums erfolgen. Es kann beispielsweise ein Profil hinterlegt sein, wann das Individuum wie empfangen werden soll. Es ist denkbar, dass die Gebäudeinfrastrukturvorrichtung akustische und/oder optische Begrüßungssignale ausgibt, um das Individuum zu empfangen. Es können beispielsweise bei verschiedenen Wegen in einem Gebäude und/oder auf einem das Gebäude zumindest teilweise umgebenden Gelände in Abhängigkeit des Individuums und dessen Arbeitsweg und/oder einer Tageszeit beispielsweise Lichter aktiviert werden, welche auf dem Arbeitsweg des Individuums angeordnet sind. Eine Helligkeit der Lichter ist individuelle regelbar und/oder einstellbar. Mittels der erfindungsgemäßen Ausgestaltung kann vorteilhaft eine Erfassung von Kenngrößen ermöglicht werden, die eine Gesundheitsgefährdung des Individuums und/oder einen unzulässigen Zugang des Gegenstands und/oder des Individuums zu einem Bereich definieren, wobei die erfassten Kenngrößen vorteilhaft zu einer Überwachung, einem Schutz und/oder einer Verwaltung des Gegenstands und/oder des Individuums nutzbar sind, insbesondere im Zusammenhang mit dem erfindungsgemäßen System.

Zudem wird vorgeschlagen, dass die Gebäudeinfrastrukturvorrichtung des Systems zumindest eine Schnittstelleneinheit zu einer Verbindung mit einer Erweiterungsvorrichtung aufweist, die zumindest eine Kommunikationseinheit zu einer Kommunikation von elektronischen Daten mit zumindest einem externen Funktionsmodul umfasst. Die Schnittstelleneinheit ist vorzugsweise dazu vorgesehen, die Erweiterungsvorrichtung datenübertragungstechnisch mit der Gebäudeinfrastrukturvorrichtung zu verbinden. Alternativ oder zusätzlich ist die Schnittstelleneinheit zu einer formschlüssigen und/oder kraftschlüssigen Verbindung der Erweiterungsvorrichtung mit der Gebäudeinfrastrukturvorrichtung vorgesehen. Die Erweiterungsvorrichtung kann mittels der Schnittstelleneinheit zumindest teilweise in die Gebäudeinfrastrukturvorrichtung integriert sein oder abnehmbar an der Gebäudeinfrastrukturvorrichtung angeordnet sein. Die Erweiterungsvorrichtung ist vorzugsweise zumindest zu einer Kommunikation mit dem Funktionsmodul und/oder dem Netzwerk, mit dem die Gebäudeinfrastrukturvorrichtung vernetzt ist, vorgesehen. Die Erweiterungsvorrichtung ist bevorzugt zu einer Speicherung und/oder einer Übertragung von elektronischen Daten vorgesehen. Die speicherbaren und/oder übertragbaren elektronischen Daten können beispielsweise spezifische Raum-/Ortsdaten, insbesondere eine Position, eine Lage in einem Gebäude mit Angabe von Gebäude, Stockwerk und Raum oder Namen/Bezeichnung eines Raums/Bereichs, in dem die Gebäudeinfrastrukturvorrichtung angeordnet ist, oder andere, einem Fachmann als sinnvoll erscheinende Daten sein. Zudem können die speicherbaren und/oder übertragbaren elektronischen Daten beispielsweise sicherheitsrelevante Informationen zu einem Raum/Bereich, ähnlich einem Warnschild, zur Verfügung gestellt werden, z.B. Explosionsgefahr, Warnung vor Laser etc., oder Arbeitsbereichs- und/oder Sicherheitsregeln, die für einen von der Gebäudeinfrastrukturvorrichtung abgedeckten Bereich gelten, sicherheitstechnische Attribute und Informationen über Bereiche wie z.B. Explosionsschutz, Arbeiten nur mit Totmannüberwachung, lärmtechnische Attribute für Bereiche wie z.B. alle Arten von Arbeiten deren Lärmemission über einem definierten Schwellenwert liegt wie z.B. Bohren, Meißeln etc., dürfen nur in einem festgelegten Zeitfenster durchgeführt werden, oder andere, einem Fachmann als sinnvoll erscheinende Daten sein. Mittels der erfindungsgemäßen Ausgestaltung kann insbesondere vorteilhaft eine Nachrüstung ermöglicht werden. Zudem kann vorteilhaft eine einsatzspezifische Funktionserweiterung der Gebäudeinfrastrukturvorrichtung erreicht werden.

Des Weiteren wird vorgeschlagen, dass die Schnittstelleneinheit zu einer lösbaren Verbindung mit der Erweiterungsvorrichtung vorgesehen ist. Die Schnittstelleinheit umfasst zumindest ein Schnittstellenelement zu einer Anbindung der Erweiterungsvorrichtung an die Gebäudeinfrastrukturvorrichtung. Das Schnittstellenelement kann als Rastelement, als Clipelement, als Federkontaktelement, als Stecker- und/oder Buchsenelement, wie beispielsweise als USB-Stecker, als USB-Buchse, als SD-Karten-Slot, als LAN-Stecker, als LAN-Buchse usw., oder als ein anderes, einem Fachmann als sinnvoll erscheinendes Schnittstellenelement ausgebildet sein, das zu einer formschlüssigen und/oder kraftschlüssigen Verbindung und/oder zu einer datenübertragungstechnischen Verbindung der Erweiterungsvorrichtung mit der Gebäudeinfrastrukturvorrichtung vorgesehen ist. Mittels der erfindungsgemäßen Ausgestaltung kann vorteilhaft eine einem Einsatzzweck entsprechende Ausgestaltung der Gebäudeinfrastrukturvorrichtung mit einer Erweiterungsvorrichtung erreicht werden. Zudem kann vorteilhaft eine Abnahmemöglichkeit der Erweiterungsvorrichtung von der Gebäudeinfrastrukturvorrichtung zu Wartungs- und/oder Servicezwecken erfolgen.

Vorteilhafterweise umfasst die Gebäudeinfrastrukturvorrichtung zumindest eine Energieschnittstelle, die zu einer kabellosen Aufnahme und/oder Abgabe von elektrischer Energie vorgesehen ist. Vorzugsweise ist die Energieschnittstelle als induktive Energieschnittstelle ausgebildet. Es ist jedoch auch denkbar, dass die Energieschnittstelle eine andere, einem Fachmann als sinnvoll erscheinende Ausgestaltung aufweist. Mittels der erfindungsgemäßen Ausgestaltung kann vorteilhaft eine komfortable Ladefunktion der Gebäudeinfrastrukturvorrichtung und/oder einer tragbaren Werkzeugmaschine, die in einem Nahbereich der Gebäudeinfrastrukturvorrichtung angeordnet ist, ermöglicht werden.

Ferner wird ein Verfahren zu einer Lokalisierung und/oder zu einer Überwachung zumindest eines Gegenstands und/oder zumindest eines Individuums mittels des erfindungsgemäßen Systems vorgeschlagen. Vorzugsweise erfolgt eine Lokalisierung des Gegenstands und/oder des zumindest einen Individuums in Abhängigkeit einer Auswertung einer Kommunikation zwischen dem Funktionsmodul und der Gebäudeinfrastrukturvorrichtung mittels der Steuer- oder Regeleinheit. Bevorzugt ist zu einer Lokalisierung des zumindest einen Gegenstands und/oder des zumindest einen Individuums zumindest ein Funktionsmodul des Systems am Gegenstand angeordnet und/oder zumindest ein weiteres Funktionsmodul des Systems ist am Individuum, wie beispielsweise an einem Armband, an einer Uhr o. dgl., das/die das Individuum am Körper trägt, angeordnet. Mittels der erfindungsgemäßen Ausgestaltung kann vorteilhaft eine zuverlässige Lokalisierung des Gegenstands und/oder des Individuums ermöglicht werden, insbesondere eine zuverlässige Lokalisierung des Gegenstands und/oder des Individuums innerhalb eines Gebäudes oder innerhalb eines das Gebäude zumindest teilweise umgebenden Geländes, das zumindest weitestgehend gegen einen Empfang und/oder eine Übertragung von Daten einer globalen Standortbestimmungsvorrichtung, wie beispielsweise einer GPS-Vorrichtung, abgeschirmt ist.

Zudem wird vorgeschlagen, dass in zumindest einem Verfahrensschritt eine Zuordnung des zumindest einen Gegenstands, an dem das Funktionsmodul angeordnet ist, zu dem Individuum in Abhängigkeit einer gemeinsamen Bewegung des Gegenstands und des Individuums zumindest teilweise automatisch erfolgt. Bevorzugt ist zumindest ein weiteres Funktionsmodul des Systems am Individuum angeordnet. Bevorzugt wird über einen vorbestimmten Zeitraum, insbesondere ein vorbestimmter Zeitraum, der kleiner ist als 10 Stunden, bevorzugt kleiner ist als 60 Minuten und besonders bevorzugt kleiner ist als 30 Minuten, eine Bewegung des Gegenstands und des Individuums erfasst. Vorzugsweise ist anhand einer Auswertung der gemeinsamen Bewegung eine zumindest im Wesentlichen eindeutige Zuordnung des Gegenstands zum Individuum realisierbar. Mittels der erfindungsgemäßen Ausgestaltung kann vorteilhaft zuverlässig eine Zuordnung erfolgen, wobei besonders vorteilhaft in Abhängigkeit der Zuordnung eine Überwachung, eine Verwaltung und/oder eine Steuerung, wie beispielsweise eine Zugangssteuerung zu Bereichen, des Gegenstands und des Individuums erfolgen kann. Beispielsweise ist infolge einer Zuordnung des Gegenstands, insbesondere einer tragbaren Werkzeugmaschine oder eines Sicherheitskleidungsstücks, zu dem Individuum, insbesondere einem Bediener der tragbaren Werkzeugmaschine, eine Durchführung von Arbeiten, für die das Individuum keine Ausbildung aufweist oder die ein Vorhandensein einer vorgegebenen Sicherheitskleidung erfordert, in Abhängigkeit einer Zuordnung des Gegenstands zum Individuum steuerbar, insbesondere erlaubbar oder unterbindbar, wie beispielsweise durch einen Eingriff in eine Steuereinheit der tragbaren Werkzeugmaschine oder durch eine Zugangsverweigerung zu einem Bereich usw. Vorteilhaft sind mittels des erfindungsgemäßen Verfahrens zumindest das Individuum und zumindest der Gegenstand, welcher beispielsweise das Individuum trägt, über ein gemeinsames Bewegungsprofil als zusammengehöriger Schwarm identifizierbar. Diesem Schwarm können vorteilhaft von der Steuer- oder Regeleinheit Berechtigungen zugewiesen werden. Es kann vorteilhaft zumindest teilweise automatisch über das erfindungsgemäße System ein Schwarm identifiziert werden und damit ein Berechtigungsmanagement durchgeführt werden. Wird beispielsweise dem Individuum ein bestimmter Auftrag zugewiesen, wofür bestimmte Gegenstände erforderlich sind, kann vorteilhaft geprüft werden, ob das Individuum alle zur Durchführung des Auftrags relevanten Gegenstände mit sich führt. Falls erforderlich, kann das Individuum vorteilhaft mittels der Ausgabeeinheit des Funktionsmoduls und/oder der Ausgabeeinheit der Gebäudeinfrastrukturvorrichtung darauf aufmerksam gemacht werden, dass beispielsweise ein bestimmter Gegenstand nicht mitgeführt wird.

Des Weiteren wird vorgeschlagen, dass in zumindest einem Verfahrensschritt eine Bewegungshistorie zu einer Zuordnung zumindest eines Gegenstands, an dem das Funktionsmodul angeordnet ist, zu einem Individuum genutzt wird. Es ist beispielsweise eine Bewegungshistorie, die eine Bewegung des Gegenstands und/oder des Individuums über einen bisher verstrichenen Teil eines gesamten Arbeitstags beschreibt, heranziehbar. Es ist vorteilhaft eine in einer Vergangenheit liegende Bewegung des Gegenstands und/oder des Individuums zu einer Zuordnung nutzbar. Das erfindungsgemäße Verfahren kann sich bevorzugt auf Veränderungen einstellen. Wird beispielsweise zumindest ein Gegenstand, insbesondere eine tragbare Werkzeugmaschine, übergeben, kann infolge einer Auswertung der Bewegungshistorie des Gegenstands eine Übergabe erkannt werden und eine Neuzuordnung erfolgen. Ist eine Zuordnung nicht eindeutig, ist es auch denkbar, dass weitere Kenngrößen bei einer Zuordnung berücksichtigt werden. Beispielsweise werden Arbeitsschuhe weitestgehend über eine gesamte Lebensdauer von einem einzelnen Individuum getragen, wobei eine Schutzbrille auch von unterschiedlichen Individuen tragbar ist. Die Arbeitsschuhe sind somit bevorzugt einem bestimmten Individuum zuordenbar. Zudem ist es denkbar, dass das Verfahren mit intelligenten Annahmen arbeitet, wenn die Zuordnung nicht eindeutig ist. Mittels der erfindungsgemäßen Ausgestaltung ist vorteilhaft eine zuverlässige und genaue Zuordnung realisierbar, insbesondere bei einer Überwachung von verschiedenen Gegenständen und/oder Individuen, die sich zumindest temporär gemeinsam bewegen. Zudem kann vorteilhaft eine Plausibilitätsprüfung erfolgen, um eine besonders zuverlässige Zuordnung zu ermöglichen.

Ferner wird vorgeschlagen, dass in zumindest einem Verfahrensschritt in Abhängigkeit einer Zuordnung des zumindest einen Gegenstands zu dem zumindest einen Individuum eine Zugangsberechtigung zu einem Arbeitsbereich oder zu einem Raum und/oder eine Arbeitsberechtigung zu einer Nutzung des Gegenstands erfolgen/erfolgt. Mittels der erfindungsgemäßen Ausgestaltung kann vorteilhaft eine Einhaltung von Arbeitssicherheitsregeln und/oder eine Zugangsberechtigung ermöglicht werden.

Zudem wird vorgeschlagen, dass in zumindest einem Verfahrensschritt in Abhängigkeit einer Zuordnung des zumindest einen Gegenstands zu den zumindest einen Individuum eine Informationsausgabe mittels einer Ausgabeeinheit erfolgt. Es ist beispielsweise denkbar, dass ein Eintreten des Individuums in ein Gebäude und/oder in ein das Gebäude zumindest teilweise umgebendes Gelände, beispielsweise mittels einer Annäherungssensoreinheit (Infrarotkameraeinheit, einer Bewegungssensoreinheit o. dgl.) erfassbar ist. Alternativ oder zusätzlich ist es auch denkbar, dass in Abhängigkeit einer Kommunikation des mobilen Funktionsmoduls und der Gebäudeinfrastrukturvorrichtung ein Eintreten des Individuums in ein Gebäude und/oder in ein das Gebäude zumindest teilweise umgebendes Gelände erfassbar ist. Ist das Individuum, beispielsweise infolge einer individuellen und mittels der Kommunikation übertragbaren Kennung, dem System bekannt, kann beispielsweise eine zuvor hinterlegte und/oder individuell anpassbare Prozedur zum Empfang des Individuums erfolgen. Es kann beispielsweise ein Profil hinterlegt sein, wann das Individuum wie empfangen werden soll. Es ist denkbar, dass die Gebäudeinfrastrukturvorrichtung akustische und/oder optische Begrüßungssignale ausgibt, um das Individuum zu empfangen. Es können bei verschiedenen Wegen in einem Gebäude und/oder auf einem das Gebäude zumindest teilweise umgebenden Gelände in Abhängigkeit des Individuums und dessen Arbeitsweg und/oder einer Tageszeit beispielsweise Lichter aktiviert werden, welche auf dem Arbeitsweg des Individuums angeordnet sind. Eine Helligkeit der Lichter ist individuell regelbar und/oder einstellbar.

Mittels der erfindungsgemäßen Ausgestaltung sind vorteilhaft Handlungsanweisungen ausgebbar, die in Abhängigkeit der Zuordnung erfolgen. Es kann vorteilhaft eine Information ausgegeben werden, um das Individuum individuell und komfortabel über Ereignisse zu informieren. Zudem kann vorteilhaft eine Fehlinterpretation von Beschränkungen, wie beispielsweise eine Zugangsbeschränkung, eine Arbeitsbeschränkung, weitestgehend verhindert werden. Zudem kann vorteilhaft eine Handlung des Individuums zu einer Behebung der Beschränkung initiiert werden, da mittels einer Informationsausgabe eine Anweisung zu einer Behebung der Beschränkung erfolgen kann.

Das erfindungsgemäße System, die erfindungsgemäße Gebäudeinfrastrukturvorrichtung und/oder das erfindungsgemäße Verfahren sollen/soll hierbei nicht auf die oben beschriebene Anwendung und Ausführungsform beschränkt sein. Insbesondere können/kann das erfindungsgemäße System, die erfindungsgemäße Gebäudeinfrastrukturvorrichtung und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes System mit zumindest einem mobilen Funktionsmodul und mit zumindest einer erfindungsgemäßen Gebäudeinfrastrukturvorrichtung zumindest zu einer Kommunikation mit dem Funktionsmodul in einer schematischen Darstellung,
- Fig. 2: eine Detailansicht des Funktionsmoduls des erfindungsgemäßen Systems in einer schematischen Darstellung,
- Fig. 3: ein Vernetzungsschema des erfindungsgemäßen Systems mit verschiedenen externen Einheiten in einer schematischen Darstellung,
- Fig. 4: eine Darstellung von verschiedenen Gegenständen, an dem das Funktionsmodul angeordnet sein kann, oder die eine externe Einheit darstellen, mit der die Gebäudeinfrastrukturvorrichtung kommunizieren kann, in einer schematischen Darstellung,
- Fig. 5: eine Darstellung von verschiedenen Ausgestaltungsvarianten der erfindungsgemäßen Gebäudeinfrastrukturvorrichtung in einer schematischen Darstellung,
- Fig. 6: eine Detailansicht einer Ausgestaltung der erfindungsgemäßen Gebäudeinfrastrukturvorrichtung als Brand- und/oder Rauchmeldevorrichtung in einer schematischen Darstellung,
- Fig. 7: eine Detailansicht einer alternativen Ausgestaltung der erfindungsgemäßen Gebäudeinfrastrukturvorrichtung als Brand- und/oder Rauchmeldevorrichtung in einer schematischen Darstellung,
- Fig. 8: eine Detailansicht einer weiteren alternativen Ausgestaltung der erfindungsgemäßen Gebäudeinfrastrukturvorrichtung als Brand- und/oder Rauchmeldevorrichtung in einer schematischen Darstellung,
- Fig. 9: eine Anordnung einer Vielzahl von erfindungsgemäßen Gebäudeinfrastrukturvorrichtungen des erfindungsgemäßen Systems zu einer Unterteilung eines Bereichs in Zellen, wobei sich mehrere Individuen und Gegenstände gemeinsam in einer der Zellen aufhalten, in einer schematischen Darstellung,
- Fig. 10: die Anordnung gemäß Figur 9, wobei sich die Individuen und die Gegenstände zumindest teilweise in unterschiedlichen Zellen aufhalten, in einer schematischen Darstellung und
- Fig. 11: die Anordnung gemäß Figur 9, wobei sich die Individuen und die Gegenstände vollständig in unterschiedlichen Zellen aufhalten, in einer schematischen Darstellung.

### Beschreibung des Ausführungsbeispiels

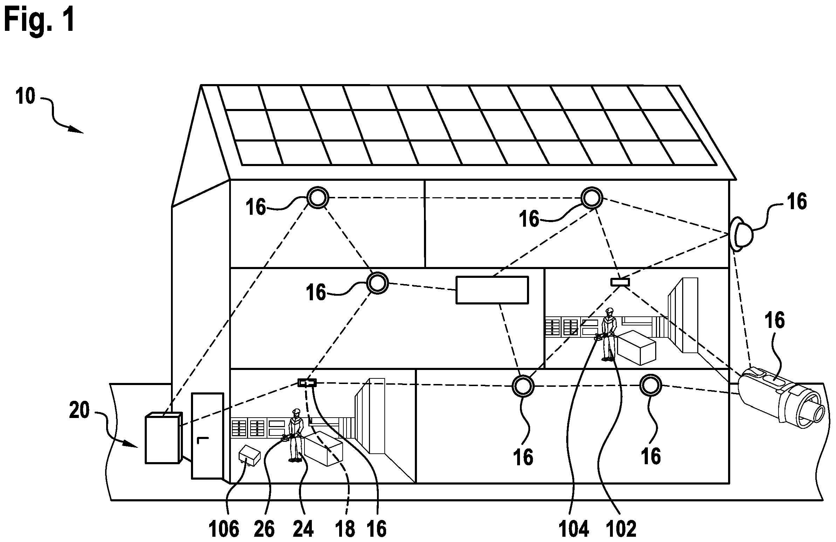

Figur 1 zeigt ein System 10 zu einer Vernetzung von zumindest einem Gegenstand 26 und/oder zumindest einem Individuum 24 miteinander und/oder mit einem Netzwerk, insbesondere zu einer Vernetzung von zumindest einem Gegenstand 26 und/oder zumindest einem Individuum 24 mit einem Netzwerk eines Gebäudesicherheitssystems und/oder eines Gebäudebrandmeldesystems. Das System 10 ist zu einer Überwachung, einer Verwaltung, einem Schutz und/oder einer Steuerung von dem zumindest einen Gegenstand 26 und/oder dem zumindest einen Individuum 24 vorgesehen. Das System 10 ist als Handwerkzeugmaschinensystem ausgebildet, das zu einer Vernetzung von zumindest einem bei einer Bearbeitung von einem Werkstück nutzbaren und/oder zu einem Schutz eines Individuums 24 nutzbaren Gegenstand 26 mit zumindest dem Netzwerk des Gebäudesicherheitssystems und/oder des Gebäudebrandmeldesystems vorgesehen ist. Zudem ist das als Handwerkzeugmaschinensystem ausgebildete System 10 zu einer Vernetzung von dem zumindest einen Individuum 24 mit dem zumindest einen Gegenstand 26 und/oder mit zumindest dem Netzwerk des Gebäudesicherheitssystems und/oder des Gebäudebrandmeldesystems vorgesehen. Es ist jedoch auch denkbar, dass das System 10 als ein anderes, einem Fachmann als sinnvoll erscheinendes System zu einer Vernetzung von zumindest einem Gegenstand 26 und/oder von zumindest einem Individuum 24 miteinander und/oder mit einem übergeordneten Netzwerk eines anderen Wirkungsbereichs ausgebildet ist, wie beispielsweise als System für den Öffentlichen Dienst, als System für Pflegeheime, als System für Kinderbetreuungsstätten, als System für Bildungsstätten, als System für Krankenhäuser, als System für Kaufhäuser o. dgl.

Das System 10 umfasst zumindest ein mobiles Funktionsmodul 12, das zumindest eine Kommunikationseinheit 14 zu einer Kommunikation von elektronischen Daten aufweist, zumindest eine Gebäudeinfrastrukturvorrichtung 16, die zumindest eine Kommunikationseinheit 18 zu einer Kommunikation mit dem Funktionsmodul 12 aufweist, und zumindest eine Steuer- und/oder Regeleinheit 20, die zumindest dazu vorgesehen ist, anhand einer Auswertung einer Kommunikation zwischen dem Funktionsmodul 12 und der Gebäudeinfrastrukturvorrichtung 16 zumindest auf eine Position des Funktionsmoduls 12 zu schließen, insbesondere auf eine Position des Funktionsmoduls 12 innerhalb eines mittels des Systems 10 überwachten Bereichs. Das Funktionsmodul 12 ist zumindest dazu vorgesehen, zumindest eine gegenstandsspezifische Kenngröße, eine bedienerspezifische Kenngröße und/oder eine umgebungsspezifische Kenngröße zu erfassen und/oder zumindest an die Gebäudeinfrastrukturvorrichtung 16 zu übertragen, insbesondere mittels der Kommunikationseinheit 14 des Funktionsmoduls 12. Das Funktionsmodul 12 ist zumindest dazu vorgesehen, zumindest eine gegenstandsspezifische Kenngröße, eine bedienerspezifische Kenngröße und/oder eine umgebungsspezifische Kenngröße von dem zumindest einen Gegenstand 26 und/oder von dem zumindest einen Individuum 24 zu erfassen, an dem das Funktionsmodul 12 angeordnet ist. Das Funktionsmodul 12 ist lösbar an dem Gegenstand 26, lösbar an einem autonomen Fortbewegungsgerät 106 oder lösbar an dem Individuum 24 anordenbar. Es ist jedoch auch denkbar, dass das Funktionsmodul 12 unlösbar an dem Gegenstand 26, dem autonomen Fortbewegungsgerät 106 oder dem Individuum 24 angeordnet ist, insbesondere in den Gegenstand 26, in das autonome Fortbewegungsgerät 106 oder das Individuum 24 integriert ist. Das System 10 umfasst bevorzugt eine Vielzahl an Gebäudeinfrastrukturvorrichtungen 16, die an das Netzwerk des Gebäudesicherheitssystems und/oder des Gebäudebrandmeldesystems angeschlossen sind. Das System 10 umfasst vorzugsweise eine Vielzahl an Funktionsmodulen 12, die an einer Vielzahl an unterschiedlichen oder gleichen Gegenständen 26 und/oder an einer Vielzahl an Individuen 24 anordenbar sind. Die Funktionsmodule 12 sind variabel an unterschiedlichen Gegenständen 26 und/oder an verschiedenen Individuen 24 anordenbar. Es ist jedoch auch denkbar, dass die Funktionsmodule 12 gemäß einer festen Zuordnung zu jeweils einem einzelnen Gegenstand 26 und/oder zu jeweils einem einzelnen Individuum 24 an dem jeweils zugeordneten Gegenstand 26 und/oder dem jeweils zugeordneten Individuum 24 anordenbar sind. Eine feste Zuordnung der Funktionsmodule 12 kann frei programmierbar sein. Die Funktionsmodule 12 des Systems 10 weisen eine zumindest im Wesentlichen analoge Ausgestaltung auf, so dass im Folgenden eine Beschreibung eines einzelnen Funktionsmoduls 12 auf die weiteren Funktionsmodule 12 des Systems 10 übertragbar ist.

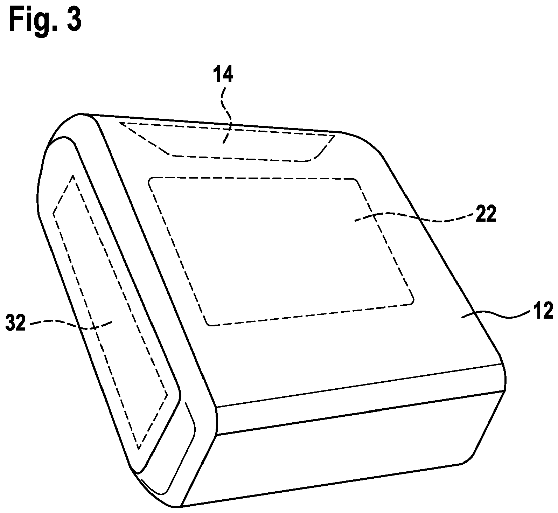

Das Funktionsmodul 12 weist zumindest eine Sensoreinheit 22 auf, die dazu vorgesehen ist, zumindest eine gegenstandsspezifische Kenngröße, eine bedienerspezifische Kenngröße und/oder eine umgebungsspezifische Kenngröße zumindest teilweise automatisch zu erfassen (Figur 3). Die Sensoreinheit 22 kann eine Vielzahl an Sensorelementen aufweisen, die zu einer zumindest teilweise automatischen Erfassung zumindest einer gegenstandsspezifischen Kenngröße, einer bedienerspezifischen Kenngröße und/oder einer umgebungsspezifischen Kenngröße vorgesehen sind. Insbesondere ist eine Kombination von verschiedensten Sensorelementen denkbar, die zu einer Erfassung unterschiedlicher gegenstandsspezifischer Kenngrößen, bedienerspezifischer Kenngrößen und/oder umgebungsspezifischer Kenngrößen vorgesehen sind. Beispielsweise umfasst die Sensoreinheit 22 zumindest eine Gegenstandskenngrößensensorelement, ein Umgebungskenngrößensensorelement und/oder ein Bedienerkenngrößensensorelement (hier nicht näher dargestellt). Hierbei können/kann das Gegenstandskenngrößensensorelement, das Umgebungskenngrößensensorelement und/oder das Bedienerkenngrößensensorelement jegliche, einem Fachmann als sinnvoll erscheinende Ausgestaltung/en aufweisen, wie beispielsweise eine Ausgestaltung als Sicherheitskleidungsstückbelastungsartsensor, als Trägerbelastungssensor (Geräuschbelastungssensor, Schwingungsbelastungssensor, o. dgl.), als Pulssensor, als Körpertemperatursensor, als Müdigkeitssensor, als Trägerausrichtungssensor, als Bewegungssensor, Umgebungsdrucksensor, als Umgebungstemperatursensor, als Umgebungsschallpegelsensor, als Umgebungsgassensor, als Umgebungsspannungssensor, als Umgebungsfeuchtigkeitssensor, als Umgebungssäure- und/oder Umgebungsbasensensor, als Gegenstandszustandssensor, als Gegenstandsartensensor o. dgl. Die mittels der Sensoreinheit 22 erfasste/n Kenngröße/n ist/sind mittels der Kommunikationseinheit 14 des Funktionsmoduls 12 an die Gebäudeinfrastrukturvorrichtung 16 übertragbar. Die an die Gebäudeinfrastrukturvorrichtung 16 übertragene/n Kenngröße/n ist/sind mittels der Steuer- und/oder Regeleinheit 20 auswertbar und weiterverarbeitbar. Die Steuer- und/oder Regeleinheit 20 kann Teil der Gebäudeinfrastrukturvorrichtung 16 sein, insbesondere an der Gebäudeinfrastrukturvorrichtung 16 angeordnet sein. Die Steuer- und/oder Regeleinheit 20 kann als Zentralrecheneinheit ausgebildet sein, die zusätzlich zu einer Auswertung und Weitererarbeitung der übertragenen Kenngröße/n zu einer Steuerung und/oder Regelung des Netzwerks des Gebäudesicherheitssystems und/oder des Gebäudebrandmeldesystems vorgesehen ist. Es ist jedoch auch denkbar, dass die Steuer- und/oder Regeleinheit 20 am Funktionsmodul 12 angeordnet ist und eine Auswertung und Weiterverarbeitung von erfassten Kenngrößen der Sensoreinheit 22 unabhängig von einer Weiterleitung an die Gebäudeinfrastrukturvorrichtung 16 erfolgt. Weitere, einem Fachmann als sinnvoll erscheinende Ausgestaltungen und/oder Anordnungen der Steuer- und/oder Regeleinheit 20 sind ebenfalls denkbar, wie beispielsweise eine Ausgestaltung der Steuer- und/oder Regeleinheit 20 als Firmenzentralrechner, der zu einer Verarbeitung zumindest einer Vielzahl in einer Firma anfallenden Daten vorgesehen ist, o. dgl.

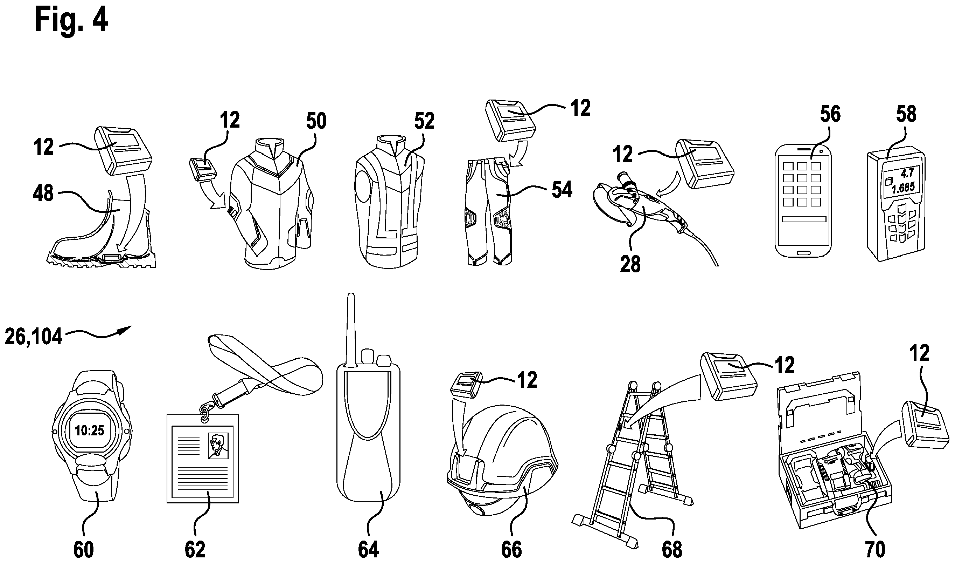

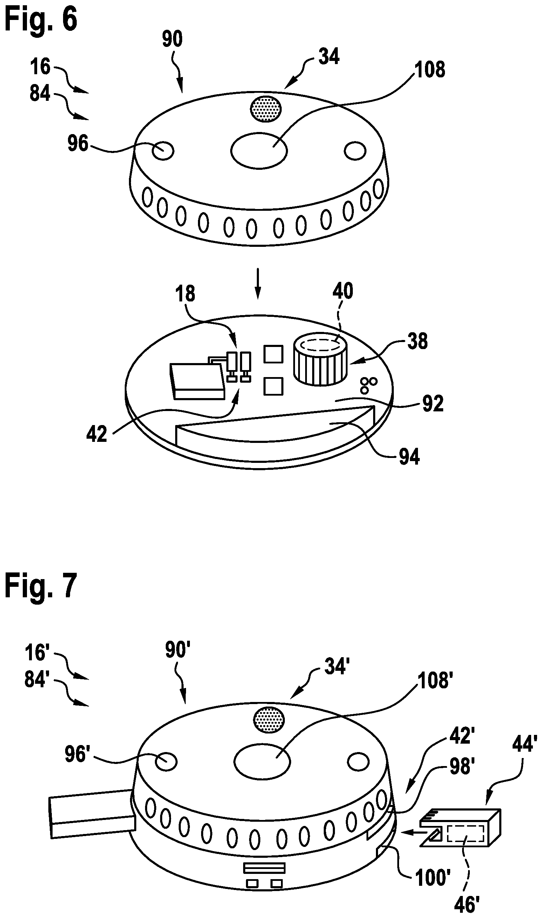

Die Steuer- und/oder Regeleinheit 20 weist zumindest eine Auswertefunktion auf, die zumindest dazu vorgesehen ist, zumindest in Abhängigkeit von den zwischen dem Funktionsmodul 12 und der Gebäudeinfrastrukturvorrichtung 16 übertragenen Daten auf einen Vitalzustand eines Individuums 24, auf eine Belastung eines Individuums 24 und/oder auf ein Gefährdungspotential eines Individuums 24 zu schließen. Es ist denkbar, dass beispielsweise mittels eines Sensorelements, insbesondere eines Geräuschsensorelements, der Sensoreinheit 22 des Funktionsmoduls 12 ein Geräuschpegel erfassbar ist. Dieser Geräuschpegel ist beispielsweise mittels der Steuer- und/oder Regeleinheit 20 auswertbar, insbesondere infolge einer Übertragung des Geräuschpegels an die Steuer- und/oder Regeleinheit 20 mittels einer Kommunikation zwischen dem Funktionsmodul 12 und der Gebäudeinfrastrukturvorrichtung 16. Ist ein Überschreiten eines Geräuschpegelgrenzwerts mittels der Auswertefunktion feststellbar, so ist mittels einer Ausgabeeinheit 32 des Funktionsmoduls 12 (Figur 3) und/oder mittels einer Ausgabeeinheit 34 der Gebäudeinfrastrukturvorrichtung16 (Figur 6) beispielsweise eine entsprechende Information ausgebbar, insbesondere ein Warnsignal und/oder ein Warnsymbol. Ferner ist es denkbar, dass weitere, einem Fachmann als sinnvoll erscheinende Kenngrößen mittels der Sensoreinheit 22 des Funktionsmoduls 12 erfassbar sind, die mittels der Auswertefunktion der Steuer- und/oder Regeleinheit 20 auswertbar sind und entsprechende Informationen mittels der Ausgabeeinheit 32 des Funktionsmoduls 12 und/oder mittels der Ausgabeeinheit 34 der Gebäudeinfrastrukturvorrichtung16 ausgebbar sind. Es kann beispielsweise eine Erfassung einer Umgebungshelligkeit, eines Status eines Zustands eines Sicherheitskleidungsstücks 30, eines Vorliegens einer Radioaktivität, einer Säure, eines Gases, einer Staubbelastung usw., einer Umgebungstemperatur, eines Untergrundzustands, eines Anliegens einer elektrischen Spannung, einer Überlastung eines Trägers des als Sicherheitskleidungsstücks 30 ausgebildeten Gegenstands 26 (Figur 4), wie beispielsweise durch Fehlhaltung, durch Anheben einer zu hohen Last o. dgl., einer Anzahl von Schritten, eines Gewichts eines Trägers des Sicherheitskleidungsstücks 30, eine Tagesleistung eines Trägers des Sicherheitskleidungsstücks 30, von verbrauchten Kalorien o. dgl. mittels der Sensoreinheit 22 des Funktionsmoduls 12 erfolgen.

Des Weiteren weist die Steuer- und/oder Regeleinheit 20 zumindest eine Zugangskontrollfunktion auf, die zumindest dazu vorgesehen ist, zumindest in Abhängigkeit von den zwischen dem Funktionsmodul 12 und der Gebäudeinfrastrukturvorrichtung 16 übertragenen Daten einen Zugang des Gegenstands 26 und/oder des Individuums 24, an denen oder an dem zumindest ein Funktionsmodul 12 angeordnet ist, zu einem Arbeitsbereich oder zu einem Raum zu überwachen, freizugeben oder zu sperren. Die Zugangskontrollfunktion ist beispielsweise zu einer Überwachung, einer Freigabe oder einer Sperrung eines Zugangs dazu vorgesehen, zumindest einen Ausbildungsstatus des Individuums 24, zumindest ein Vorhandensein einer für einen Zugang notwendigen Kombination von Sicherheitskleidungsstücken 30, einen Zustand einzelner Teile einer für einen Zugang notwendigen Kombination von Sicherheitskleidungsstücken 30 oder weitere, einem Fachmann als sinnvoll erscheinende Vorgaben zu überprüfen, die infolge einer Übertragung von Daten zwischen dem Funktionsmodul 12 und der Gebäudeinfrastrukturvorrichtung 16 der Steuer- und/oder Regeleinheit 20 zur Verfügung gestellt werden.

Ferner ist die Steuer- und/oder Regeleinheit 20 zumindest dazu vorgesehen, zumindest in Abhängigkeit von den zwischen dem Funktionsmodul 12 und der Gebäudeinfrastrukturvorrichtung 16 übertragenen Daten mittels des Funktionsmoduls 12 aktiv in eine Steuerung und/oder Regelung eines als tragbare Werkzeugmaschine 28 (Figur 4) ausgebildeten Gegenstands 26, an dem das Funktionsmodul 12 angeordnet ist, einzugreifen. Das Funktionsmodul 12 weist eine Steuerschnittstelle (hier nicht näher dargestellt) auf, die zumindest in einem am Gegenstand 26 angeordneten Zustand des Funktionsmoduls 12 eine Beeinflussung einer Steuerung und/oder Regelung des Gegenstands 26 ermöglicht. Die Steuerschnittstelle ist datenübertragungstechnisch mit einer Elektronikeinheit (hier nicht näher dargestellt) des als tragbare Werkzeugmaschine 28 ausgebildeten Gegenstands 26 verbindbar. Beispielsweise ist mittels der Steuer- und/oder Regeleinheit 20 bei einer Erkennung eines unzureichenden Ausbildungsstatus eines Individuums 24 eine Aktivierbarkeit des als tragbare Werkzeugmaschine 28 ausgebildeten Gegenstands 26 unterbindbar, um eine mögliche Fehlbedienung des Gegenstands 26 und/oder eine mögliche Verletzung des Individuums 24 zu vermeiden. Der Ausbildungsstatus des Individuums 24 kann in einer zentralen Datenbank hinterlegt sein, auf den die Steuer- und/oder Regeleinheit 20 zugreifen kann. Ferner kann der Ausbildungsstatus des Individuums 24 mittels einer externen Einheit 36 an die Steuer- und/oder Regeleinheit 20 übertragbar sein oder infolge eines Einlesens einer Ausbildungsstatuskenngröße mittels der Sensoreinheit 22 des Funktionsmoduls 12, wie beispielsweise mittels eines als ID-Kartenleseelements ausgebildeten Sensorelements der Sensoreinheit 22 des Funktionsmoduls 12, abrufbar sein. Zudem sind weitere Aktionen, wie beispielsweise eine Einstellung von Sicherheitsfunktionen des als tragbare Werkzeugmaschine 28 ausgebildeten Gegenstands 26, eine Einstellung von Werkzeugmaschinenkenngrößen zu einer optimalen Bearbeitung eines Werkstücks o. dgl., mittels der Steuer- und/oder Regeleinheit 20 durchführbar, die abhängig sind von den zwischen dem Funktionsmodul 12 und der Gebäudeinfrastrukturvorrichtung 16 übertragenen Daten. Die zwischen dem Funktionsmodul 12 und der Gebäudeinfrastrukturvorrichtung 16 übertragbaren Daten können Daten sein, die auf Kenngrößen basieren, die mittels der Sensoreinheit 22 des Funktionsmoduls 12 erfasst wurden, die infolge von Gefährdungsanalysen von Arbeitsbereichen in einer zentralen Datenbank hinterlegt sind, die mittels einer manuellen Eingabe gegenstandspezifisch, bedienerspezifisch und/oder umgebungsspezifisch in einer Speichereinheit (hier nicht dargestellt) des Funktionsmoduls 12 und/oder der Steuer- und/oder Regeleinheit 20 hinterlegt sind o. dgl.

Des Weiteren weist die Steuer- und/oder Regeleinheit 20 zumindest eine Überwachungsfunktion auf, die dazu vorgesehen ist, zumindest in Abhängigkeit von den zwischen dem Funktionsmodul 12 und der Gebäudeinfrastrukturvorrichtung 16 übertragenen Daten ein Vorhandensein von zumindest einem vorgeschriebenen Sicherheitskleidungsstück 30 und/oder einer Kombination von vorgeschriebenen Sicherheitskleidungsstücken 30 zu überwachen. Es ist beispielsweise denkbar, dass infolge einer Zuordnung zumindest eines Sicherheitskleidungsstücks 30, an dem zumindest das Funktionsmodul 12 angeordnet ist, zu einem Individuum 24, das mittels der Sensoreinheit 22 des Funktionsmoduls 12 als Träger des Sicherheitskleidungsstücks 30 erkennbar ist, und einem Abgleich von Arbeitsbereichs- und/oder Sicherheitsregeln, die in einer Speichereinheit der Steuer- und/oder Regeleinheit 20 hinterlegt sind, ein Vorhandensein von zumindest einem vorgeschriebenen Sicherheitskleidungsstück 30 und/oder einer Kombination von vorgeschriebenen Sicherheitskleidungsstücken 30 bei einem Betreten eines Arbeitsbereichs überwachbar sind, wobei ein Betreten des Arbeitsbereichs infolge einer Kommunikation zwischen dem Funktionsmodul 12 und der in dem Arbeitsbereich angeordneten Gebäudeinfrastrukturvorrichtung 16 erkennbar ist. Es ist zudem beispielsweise denkbar, dass das Individuum 24 ein Funktionsmodul 12 direkt am Körper trägt, wie beispielsweise ein in einer Armbanduhr 60 o. dgl. integriertes Funktionsmodul 12, und ein weiteres Funktionsmodul (hier nicht näher dargestellt) des Systems 10 an dem Sicherheitskleidungsstück 30 angeordnet ist, das das Individuum 24 trägt. Es erfolgt infolge einer gemeinsamen Bewegung des Individuums 24 und des Sicherheitskleidungsstücks 30 eine Zuordnung des Sicherheitskleidungsstücks 30 zum Individuum 24. Bei einem Betreten eines Arbeitsbereichs infolge einer Kommunikation zwischen dem Funktionsmodul 12 und der in dem Arbeitsbereich angeordneten Gebäudeinfrastrukturvorrichtung 16 erfolgt ein Abgleich von einem für den Arbeitsbereich vorgeschriebenen Sicherheitskleidungsstück und einem tatsächlich von dem Individuum 24 getragenen Sicherheitskleidungsstück 30 mittels der Überwachungsfunktion der Steuer- und/oder Regeleinheit 20. Weitere, einem Fachmann als sinnvoll erscheinende Ausgestaltungen zu einer Realisierung der Überwachungsfunktion der Steuer- und/oder Regeleinheit 20 sind ebenfalls denkbar. Die Steuer- und/oder Regeleinheit 20 weist zudem zumindest eine Zuordnungsfunktion auf, die dazu vorgesehen ist, zumindest in Abhängigkeit von den zwischen dem Funktionsmodul 12 und der Gebäudeinfrastrukturvorrichtung 16 übertragenen Daten zumindest eine Zuordnung zumindest eines Gegenstands 26, an dem das Funktionsmodul 12 angeordnet ist, zu einem Individuum 24 zumindest in Abhängigkeit einer gemeinsamen Bewegung zu realisieren.

Ferner weist die Steuer- und/oder Regeleinheit 20 zumindest eine Ausgabefunktion auf, die dazu vorgesehen ist, zumindest in Abhängigkeit von den zwischen dem Funktionsmodul 12 und der Gebäudeinfrastrukturvorrichtung 16 übertragenen Daten zumindest eine Information mittels der Ausgabeeinheit 32 des Funktionsmoduls 12 (Figur 3) und/oder mittels der Ausgabeeinheit 34 der Gebäudeinfrastrukturvorrichtung 16 (Figur 6) auszugeben. Ist beispielsweise mittels der Überwachungsfunktion der Steuer- und/oder Regeleinheit 20 ein Nichtvorhandensein zumindest eines für einen Arbeitsbereich und/oder zur Durchführung einer Arbeitstätigkeit vorgeschriebenen Sicherheitskleidungsstücks 30 erkannt, ist mittels der Ausgabeeinheit 32 des Funktionsmoduls 12 und/oder mittels der Ausgabeeinheit 34 der Gebäudeinfrastrukturvorrichtung 16 ein akustischer, optischer und/oder haptischer Hinweis ausgebbar, der ein Individuum 24 auf ein Nichtvorhandensein aufmerksam macht. Mittels der Ausgabeeinheit 32 des Funktionsmoduls 12 und/oder der Ausgabeeinheit 34 der Gebäudeinfrastrukturvorrichtung 16 sind zudem weitere, einem Fachmann als sinnvoll erscheinende Informationen ausgebbar, wie beispielsweise ein Vorhandensein einer schädlichen Gaskonzentration in einem Arbeitsbereich, die insbesondere mittels der Sensoreinheit 22 des Funktionsmoduls 12 erfassbar ist. Infolge einer Kommunikation mit der Gebäudeinfrastrukturvorrichtung 16 ist die Information an weitere Komponenten des Systems 10 weiterleitbar, um Warnhinweise an weitere Stellen auszugeben und/oder um Maßnahmen zu einer Beseitigung der Gefährdung zu initiieren, insbesondere durch die Steuer- und/oder Regeleinheit 20 initiierbare Maßnahmen.

Zudem weist die Steuer- und/oder Regeleinheit 20 zumindest eine Berechtigungsfunktion auf, die dazu vorgesehen ist, zumindest in Abhängigkeit von den zwischen dem Funktionsmodul 12 und der Gebäudeinfrastrukturvorrichtung 16 übertragenen Daten zumindest eine Berechtigung einer Nutzung eines Gegenstands 26, an dem das Funktionsmodul 12 angeordnet ist, vorzugeben. Es ist beispielsweise denkbar, dass zu einer Nutzung eines Gegenstands 26 eine Zusatzqualifikation notwendig ist. Weist ein Individuum 24 diese Zusatzqualifikation nicht auf oder ist das Vorhandensein dieser Zusatzqualifikation des Individuums 24 nicht hinterlegt, insbesondere nicht in einer zentralen Datenbank hinterlegt, auf den die Steuer- und/oder Regeleinheit 20 Zugriff besitzt, ist eine Nutzung des Gegenstands 26 untersagt, wobei insbesondere eine Inbetriebnahme des Gegenstands 26 infolge einer Kommunikation zwischen dem Funktionsmodul 12, das am Gegenstand 26 angeordnet ist, und der Gebäudeinfrastrukturvorrichtung 16 durch die Steuer- und/oder Regeleinheit 20 unterbindbar ist, insbesondere bis ein Nachweis eines Vorhandenseins der notwendigen Zusatzqualifikation erfolgt ist.

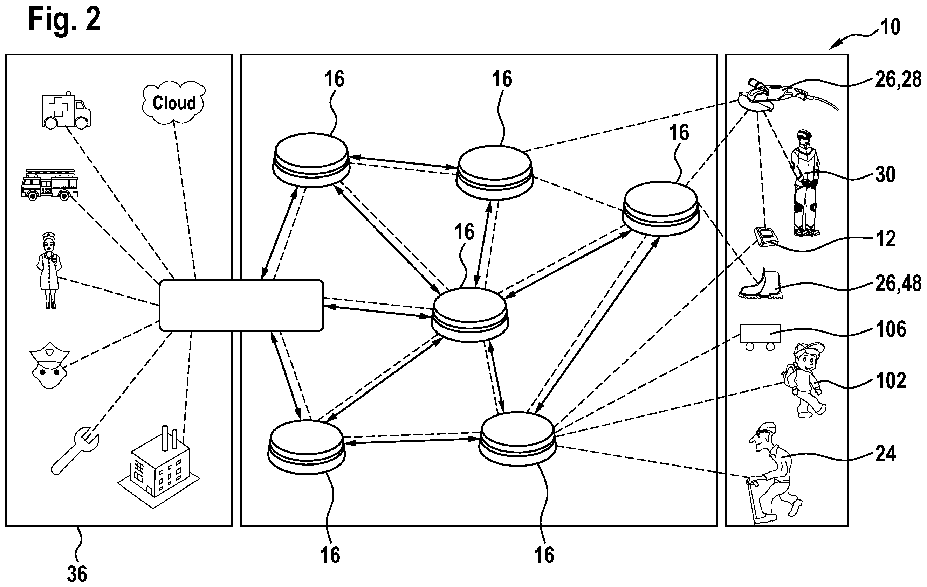

Des Weiteren ist die Kommunikationseinheit 18 der Gebäudeinfrastrukturvorrichtung 16 dazu vorgesehen, elektronische Daten an eine externe Einheit 36, die verschieden vom Funktionsmodul 12 ausgebildet ist, zu übertragen (Figur 2). Mittels der Kommunikationseinheit 18 der Gebäudeinfrastrukturvorrichtung 16 sind beispielsweise elektronische Daten an die externe Einheit 36 übertragbar, die von der Sensoreinheit 22 des Funktionsmoduls 12 erfassbar sind. Zudem sind mittels der Kommunikationseinheit 18 der Gebäudeinfrastrukturvorrichtung 16 beispielsweise elektronische Daten auf das Funktionsmodul 12 und/oder die Steuer- und/oder Regeleinheit 20 übertragbar, die von der externen Einheit 36 zur Verfügung gestellt werden. In Figur 2 sind verschiedene externe Einheiten 36 dargestellt, wie beispielsweise eine externe Rettungseinheit, eine externe Serviceeinheit, eine externe Sicherheitseinheit, eine externe Produktionsstätte o. dgl. Die in Figur 2 dargestellten Ausführungsbeispiele der externen Einheit 36 sollen hierbei nicht abschließend für Ausgestaltungsmöglichkeiten der externen Einheit 36 verstanden werden, sondern als Beispiele für eine Vielzahl an Ausgestaltungsmöglichkeiten der externen Einheit 36. Die externe Einheit 36 kann beispielsweise auch als mobiles Telefon, insbesondere als Smartphone, des Individuums 24 ausgebildet sein, oder als tragbare Datenverarbeitungseinheit, wie beispielsweise als Laptop, als Tablet-PC usw., oder als eine andere, einem Fachmann als sinnvoll erscheinende externe Einheit 36.

Figur 4 zeigt mögliche Ausgestaltungsvarianten des Gegenstands 26, an denen das Funktionsmodul 12 des Systems 10 anordenbar ist oder in die das Funktionsmodul 12 integrierbar ist. Die in Figur 4 dargestellten möglichen Ausgestaltungsvarianten des Gegenstands 26 sollen hierbei nicht abschließend für Ausgestaltungsmöglichkeiten des Gegenstands 26 verstanden werden, sondern als Beispiele für eine Vielzahl an Ausgestaltungsmöglichkeiten des Gegenstands 26. Der Gegenstand 26 kann als Sicherheitskleidungsstück 30 (als Arbeitsschuh 48, Sicherheitsjacke 50, Sicherheitsweste 52, Sicherheitshose 54, Sicherheitshelm 66o. dgl.), als tragbare Werkzeugmaschine 28 (Winkelschleifer, Bohrmaschine, Schleifmaschine, Hobelmaschine o. dgl.), als tragbare Datenverarbeitungseinheit 56 (Smartphone, Laptop, Tablet-PC o. dgl.), als elektronisches Messgerät 58, als Armbanduhr 60, als ID-Karte 62 (Zugangsberechtigungskarte, Ausweise, Stempelkarte o. dgl.), als Funkgerät 64, als Arbeitsmittel 68 (Leiter, fahrbare Werkbank o. dgl.), als Aufbewahrungsvorrichtung 70 (Werkzeugkoffer, Werkzeugkiste o. dgl.) oder als ein anderer, einem Fachmann als sinnvoll erscheinender Gegenstand ausgebildet sein.

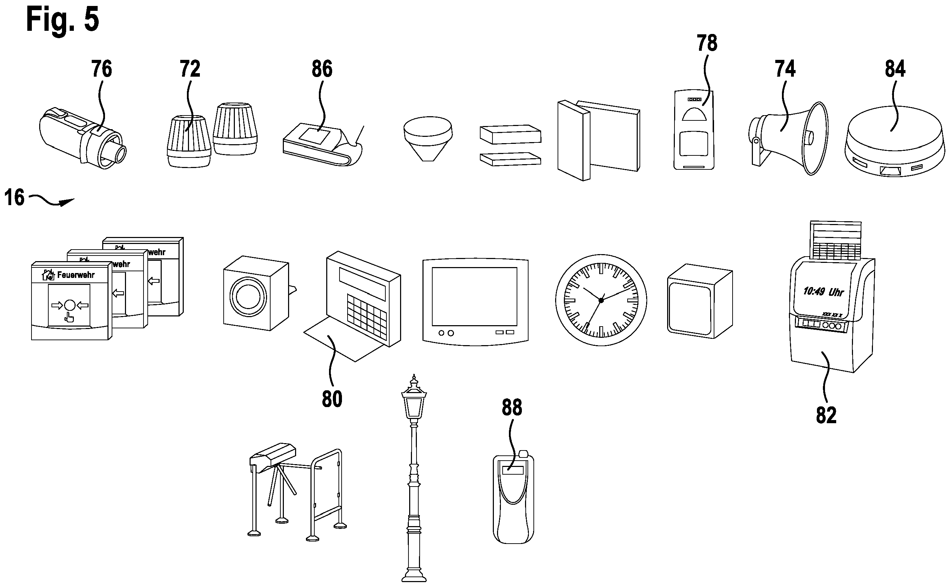

Figur 5 zeigt mögliche Ausgestaltungsvarianten der Gebäudeinfrastrukturvorrichtung 16 des Systems 10. Die in Figur 5 dargestellten möglichen Ausgestaltungsvarianten der Gebäudeinfrastrukturvorrichtung 16 sollen hierbei nicht abschließend für Ausgestaltungsmöglichkeiten der Gebäudeinfrastrukturvorrichtung 16 verstanden werden, sondern als Beispiele für eine Vielzahl an Ausgestaltungsmöglichkeiten der Gebäudeinfrastrukturvorrichtung 16. Die Gebäudeinfrastrukturvorrichtung 16 kann als optischer Signalgeber 72 (Signallampe o. dgl.), als akustischer Signalgeber 74 (Lautsprecher, Signalhorn o. dgl.), als Kamera 76, als Bewegungsmelder 78, als Zutrittkontrollvorrichtung 80 (Türschließvorrichtung, Codeeingabevorrichtung, Statusanzeigevorrichtung o. dgl.), als Zeiterfassungsvorrichtung 82 (Uhr, Codeeingabevorrichtung, Statusanzeigevorrichtung o. dgl.), als Brand- und/oder Rauchmeldevorrichtung 84, als Kommunikationsvorrichtung 86 (Telefonvorrichtung, Freisprechvorrichtung, Türsprechvorrichtung o. dgl.), Funkübertragungsvorrichtung 88 oder als eine andere, einem Fachmann als sinnvoll erscheinende Gebäudeinfrastrukturvorrichtung ausgebildet sein.

Figur 6 zeigt eine Detailansicht eines Ausführungsbeispiels der Gebäudeinfrastrukturvorrichtung 16 als Brand- und/oder Rauchmeldevorrichtung 84. Die Gebäudeinfrastrukturvorrichtung 16 umfasst zumindest eine Sicherheitstechnikeinheit 38, zu einer Erfassung und/oder Auswertung zumindest einer Sicherheitskenngröße. Die Sicherheitstechnikeinheit 38 weist zumindest eine Sensoreinheit 40 zumindest zu einer Erfassung zumindest einer Rauchkenngröße, einer Bewegungskenngröße, einer Annäherungskenngröße, einer Wärmekenngröße und/oder einer Zugangskenngröße auf. Bei einer Ausgestaltung der Gebäudeinfrastrukturvorrichtung 16 als Brand- und/oder Rauchmeldevorrichtung 84 weist die Sicherheitstechnikeinheit 38 zumindest eine Sensoreinheit 40 zumindest zu einer Erfassung zumindest einer Rauchkenngröße auf. Es ist jedoch denkbar, dass die als Brand- und/oder Rauchmeldevorrichtung 84 ausgebildete Gebäudeinfrastrukturvorrichtung 16 zusätzlich zumindest eine weitere Sensoreinheit umfasst, die zumindest zu einer Erfassung einer Bewegungskenngröße, einer Annäherungskenngröße, einer Wärmekenngröße und/oder einer Zugangskenngröße vorgesehen ist. Die Sensoreinheit 40 ist zumindest teilweise in einer Gehäuseeinheit 90 der Gebäudeinfrastrukturvorrichtung 16 angeordnet. Die Gehäuseeinheit 90 der als Brand- und/oder Rauchmeldevorrichtung 84 ausgebildeten Gebäudeinfrastrukturvorrichtung 16 weist eine, einem Fachmann bereits bekannte Ausgestaltung auf.

Die Gebäudeinfrastrukturvorrichtung 16 umfasst ferner zumindest eine Schnittstelleneinheit 42 zumindest zu einer Verbindung mit einer Erweiterungsvorrichtung 44, die zumindest die Kommunikationseinheit 18 der Gebäudeinfrastrukturvorrichtung 16 zu einer Kommunikation von elektronischen Daten mit zumindest dem externen Funktionsmodul 12 umfasst. Die Schnittstelleneinheit 42 ist als Leiterplattenschnittstelle ausgebildet, die dazu vorgesehen ist, die Erweiterungsvorrichtung 44 zumindest datenübertragungstechnisch mit einer Hauptplatine 92 der Gebäudeinfrastrukturvorrichtung 16 zu verbinden. Zudem ist die Erweiterungsvorrichtung 44 mittels der Schnittstelleneinheit 42 formschlüssig und/oder kraftschlüssig mit der Gebäudeinfrastrukturvorrichtung 16 verbunden, insbesondere mit der Hauptplatine 92 der Gebäudeinfrastrukturvorrichtung 16. Die Hauptplatine 92 ist auf eine, einem Fachmann bekannte Art und Weise in der Gehäuseeinheit 90 angeordnet.

Zu einer Energieversorgung, insbesondere bei einem Notfall, wie beispielsweise einem Stromausfall, weist die Gebäudeinfrastrukturvorrichtung 16 eine Energiespeichereinheit 94 auf, die insbesondere als wiederaufladbare Akkumulatoreinheit ausgebildet ist. Ferner weist die Gebäudeinfrastrukturvorrichtung 16 eine Notfallbeleuchtungseinheit 96 auf. Die Notfallbeleuchtungseinheit 96 kann mittels der Energiespeichereinheit 94 mit Energie versorgbar sein oder die Notfallbeleuchtungseinheit 96 umfasst eine zusätzliche Energiespeichereinheit zu einer Energieversorgung bei einem Stromausfall. Die Gebäudeinfrastrukturvorrichtung 16 umfasst zumindest eine Energieschnittstelle 108, die zu einer kabellosen Aufnahme und/oder Abgabe von elektrischer Energie vorgesehen ist. Die Energieschnittstelle 108 ist dazu vorgesehen, die Energiespeichereinheit 94 kabellos mit Energie zu versorgen, insbesondere zumindest während eines Ladevorgangs. Die Energieschnittstelle 94 ist dazu vorgesehen, kabellos Energie an zumindest einen Gegenstand 26 und/oder ein autonomes Fortbewegungsgerät 106 abzugeben, um eine Wiederaufladung einer Energiespeichereinheit, insbesondere eines Akkus, des Gegenstands 26 und/oder des autonomen Fortbewegungsgeräts 106 zu ermöglichen.

Figur 7 zeigt eine Detailansicht eines weiteren Ausführungsbeispiels einer Gebäudeinfrastrukturvorrichtung 16' des Systems 10 als Brand- und/oder Rauchmeldevorrichtung 84'. Die in Figur 7 dargestellte Gebäudeinfrastrukturvorrichtung 16' weist eine zumindest im Wesentlichen analoge Ausgestaltung zu der in der Figur 6 dargestellten Gebäudeinfrastrukturvorrichtung 16 auf. Im Unterschied zu der in der Figur 6 dargestellten Gebäudeinfrastrukturvorrichtung 16 umfasst die in Figur 7 dargestellte Gebäudeinfrastrukturvorrichtung 16' zumindest eine Schnittstelleneinheit 42', die zu einer lösbaren Verbindung, insbesondere zu einer zerstörungsfrei lösbaren Verbindung, mit einer Erweiterungsvorrichtung 44' vorgesehen ist, die zumindest eine Kommunikationseinheit 46' zu einer Kommunikation von elektronischen Daten mit zumindest dem externen Funktionsmodul 12 umfasst. Die Erweiterungsvorrichtung 44' ist zu einer Nachrüstung der in Figur 7 dargestellten Gebäudeinfrastrukturvorrichtung 16' mit der Kommunikationseinheit 46' vorgesehen. Die Schnittstelleneinheit 42' ist an einer Außenseite einer Gehäuseeinheit 90' der Gebäudeinfrastrukturvorrichtung 16' angeordnet. Die Schnittstelleneinheit 42' umfasst zumindest ein Datenkontaktelement 98' zu einer datenübertragungstechnischen Verbindung der Erweiterungsvorrichtung 44' mit der Gebäudeinfrastrukturvorrichtung 16'. Die Erweiterungsvorrichtung 44' ist als Einsteckmodul ausgebildet. Zudem umfasst die Schnittstelleneinheit 42' zumindest ein Fixierelement 100' zu einer formschlüssigen und/oder kraftschlüssigen Verbindung der Erweiterungsvorrichtung 44' mit der Gebäudeinfrastrukturvorrichtung 16'. Hinsichtlich weiterer Merkmale und Funktionen der Gebäudeinfrastrukturvorrichtung 16' darf auf die Beschreibung der in der Figur 6 dargestellten Gebäudeinfrastrukturvorrichtung 16 verwiesen werden.

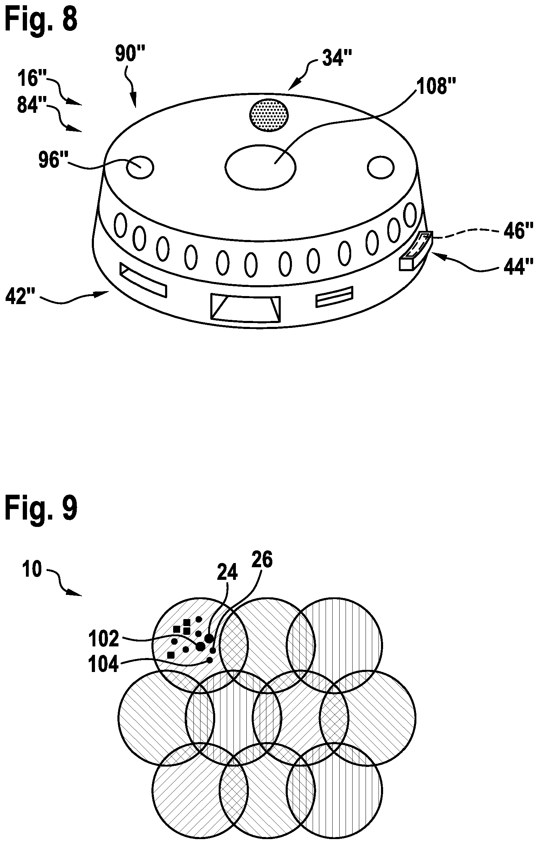

Figur 8 zeigt eine Detailansicht eines weiteren Ausführungsbeispiels einer Gebäudeinfrastrukturvorrichtung 16" des Systems 10 als Brand- und/oder Rauchmeldevorrichtung 84". Die in Figur 8 dargestellte Gebäudeinfrastrukturvorrichtung 16" weist eine zumindest im Wesentlichen analoge Ausgestaltung zu der in der Figur 7 dargestellten Gebäudeinfrastrukturvorrichtung 16' auf. Im Unterschied zu der in der Figur 7 dargestellten Gebäudeinfrastrukturvorrichtung 16' umfasst die in Figur 8 dargestellte Gebäudeinfrastrukturvorrichtung 16" zumindest eine Schnittstelleneinheit 42", die zusätzlich zu einer Verbindung mit einer Erweiterungsvorrichtung 44", weitere Schnittstellen zu einer Anbindung von verschiedenen Einheiten und/oder Vorrichtungen an die Gebäudeinfrastrukturvorrichtung 16" aufweist. Die weiteren Schnittstellen der Schnittstelleneinheit 42" sind als USB-Schnittstelle und als SD-Kartenschnittstelle ausgebildet. Mittels den weiteren Schnittstellen kann vorteilhaft direkt an der Gebäudeinfrastrukturvorrichtung 16" eine Datensicherung ermöglicht werden oder eine individuelle Einspeisung von Softwarekomponenten erfolgen. Hinsichtlich weiterer Merkmale und Funktionen der Gebäudeinfrastrukturvorrichtung 16" darf auf die Beschreibung der in der Figur 7 dargestellten Gebäudeinfrastrukturvorrichtung 16' verwiesen werden.

Figur 9 zeigt eine Anordnung einer Vielzahl von Gebäudeinfrastrukturvorrichtungen 16 des Systems 10 zu einer Unterteilung eines Bereichs in Zellen, wobei sich mehrere Individuen 24 und Gegenstände 26 gemeinsam in einer Zelle aufhalten. Jede der Zellen entspricht einem Überwachungsbereich, insbesondere einem Kommunikationsbereich, einer einzelnen Gebäudeinfrastrukturvorrichtung 16 des Systems 10. Die Zellen überlappen sich zumindest teilweise, um eine sichere Abdeckung zu ermöglichen. Im Folgenden wird ein Verfahren zumindest zu einer Lokalisierung und/oder zumindest zu einer Überwachung zumindest eines Gegenstands 26 und/oder zumindest eines Individuums 24 mittels des Systems 10 beschrieben. In zumindest einem Verfahrensschritt erfolgt eine Zuordnung zumindest eines Gegenstands 26, an dem das Funktionsmodul 12 angeordnet ist, zu einem Individuum 24, an dem zumindest ein weiteres Funktionsmodul (hier nicht näher dargestellt) des Systems 10 angeordnet ist, zumindest in Abhängigkeit einer gemeinsamen Bewegung des Gegenstands 26 und des Individuums 24 zumindest teilweise automatisch.

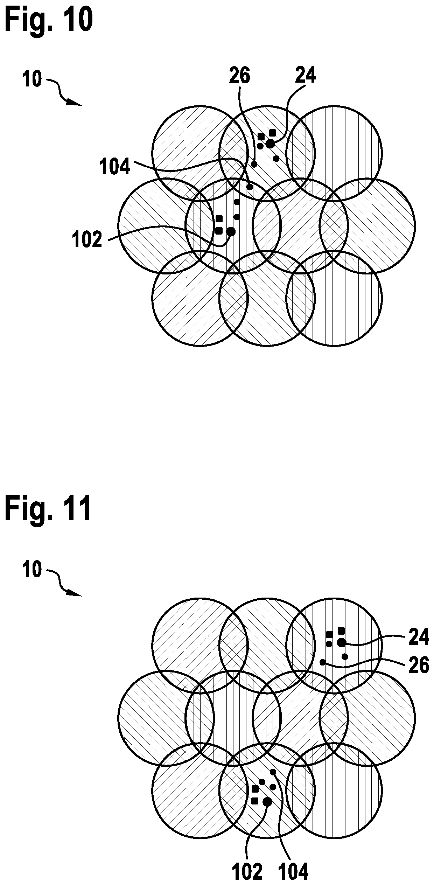

In Figur 9 befinden sich zwei Individuen 24, 102 und eine Vielzahl an Gegenständen 26, 104 gemeinsam in einer Zelle, die beispielsweise einen einzelnen Raum darstellt. Es ist denkbar, dass der Raum beispielsweise ein Werkzeugausgaberaum ist und die Individuen 24, 102 in diesem Raum die Gegenstände 26, 104 erhalten, die beispielsweise als tragbare Werkzeugmaschinen 28, als Sicherheitskleidungsstücke 30 o. dgl. ausgebildet sein können. An jedem der Gegenstände 26, 104 ist zumindest ein Funktionsmodul 12 des Systems 10 angeordnet. Zudem ist es denkbar, dass an jedem Individuum 24, 102 jeweils zumindest ein weiteres Funktionsmodul (hier nicht näher dargestellt) des Systems 10 angeordnet ist, wie beispielsweise ein in eine Armbanduhr, ein Smartphone, ein Pulsmesser o.dgl. integriertes weiteres Funktionsmodul des Systems 10. Bewegen sich die Individuen 24, 102 zusammen mit den Gegenständen 26, 104 von einer Zelle in eine weitere Zelle, wie beispielsweise infolge eines Verlassens eines Raums und einem anschließenden Betreten eines weiteren Raums, ist infolge einer Kommunikation zwischen den Funktionsmodulen 12 und den einzelnen Gebäudeinfrastrukturvorrichtungen 16, die die Zellen vorgeben, zuordenbar, welcher Gegenstand 26, 104 und welches Individuum 24, 102 sich zusammen in einer Zelle aufhalten (Figur 10). Mittels der Steuer- und/oder Regeleinheit 20 ist zumindest in Abhängigkeit von zwischen den Funktionsmodulen 12 und den Gebäudeinfrastrukturvorrichtungen 16 übertragenen Daten eine Vorabzuordnung von Gegenständen 26, 204 zu Individuen 24, 102 infolge einer zeitlichen Reihenfolge eines Eintretens in die entsprechende Zelle durchführbar.

Zu einer Überprüfung und/oder einer Korrektur der Vorabzuordnung ist es sinnvoll zusätzlich zur zeitlichen Reihenfolge eines Eintretens zumindest eine weitere Kenngröße zu berücksichtigen. Gemäß dem Verfahren zumindest zu einer Lokalisierung und/oder zumindest zu einer Überwachung zumindest eines Gegenstands 26 und/oder eines Individuums 24 wird in zumindest einem Verfahrensschritt eine Bewegungshistorie zu einer Zuordnung zumindest eines Gegenstands 26, an dem das Funktionsmodul 12 angeordnet ist, zu einem Individuum 24 genutzt. Infolge einer Bewegung der Gegenstände 26, 104 und der Individuen 24, 102 in zumindest teilweise verschiedene Zellen oder verschiedene Überwachungsbereiche von unterschiedlichen Gebäudeinfrastrukturvorrichtungen 16 des Systems 10 ist eine Zuordnung von Gegenständen 26, 104 zu einem einzelnen Individuum 24, 102, das sich zusammen mit entsprechenden Gegenständen 26, 104 in einer einzelnen Zelle aufhält, durchführbar (Figur 10). Die Gegenstände 26, 104, die sich zusammen mit einem einzelnen Individuum 24, 102 in einer einzelnen Zelle aufhalten, werden mittels des Verfahrens zumindest zu einer Lokalisierung und/oder zumindest zu einer Überwachung, insbesondere von der Steuer- und/oder Regeleinheit 20, als einzelner Schwarm identifiziert.

Insbesondere infolge einer Überlappung von Zellen und/oder infolge einer Toleranz der Kommunikation zwischen den Funktionsmodulen 12 und den Gebäudeinfrastrukturvorrichtungen 16 des Systems 10 ist es möglich, dass beispielsweise ein einzelner Gegenstand 104 nicht zuverlässig zuordenbar ist, insbesondere da er in Überwachungsbereichen von zwei verschiedenen Gebäudeinfrastrukturvorrichtungen 16 des Systems 10 angeordnet ist (Figur 10). Infolge einer weiteren gemeinsamen Bewegung der Gegenstände 26, 104 und dem den entsprechenden Gegenständen 26, 104 zugeordneten Individuum 24, 102 in weitere unterschiedliche Zellen ist infolge der Bewegungshistorie eine eindeutige Zuordnung der Gegenstände 26, 104 zu einem entsprechenden Individuum 24, 102 möglich (Figur 11). Die Gegenstände 26 halten sich zu einem Zeitpunkt zusammen mit dem Individuum 24 in einer einzelnen Zelle auf und die weiteren Gegenstände 104 halten sich zum gleichen Zeitpunkt zusammen mit dem weiteren Individuum 102 in einer anderen Zelle auf. Mittels der Steuer- und/oder Regeleinheit 20 ist auf eine eindeutige Zugehörigkeit der Gegenstände 26 zum Individuum 24 und auf eine eindeutige Zugehörigkeit der weiteren Gegenstände 104 zum weiteren Individuum 102 schließbar.

Die Steuer- und/oder Regeleinheit 20 ordnet die Gegenstände 26 infolge der gemeinsamen Bewegung über die zumindest im Wesentlichen gesamte Bewegungshistorie der Gegenstände 26 zusammen mit dem Individuum 24 dem Individuum 24 zu. Insbesondere werden die Gegenstände 26 zusammen mit dem Individuum 24 von der Steuer- und/oder Regeleinheit 20 als zusammengehöriger Schwarm identifiziert. Ferner erfolgt eine Zuordnung der weiteren Gegenstände 104 infolge der gemeinsamen Bewegung über die zumindest im Wesentlichen gesamte Bewegungshistorie der weiteren Gegenstände 104 zusammen mit dem weiteren Individuum 102 zu dem weiteren Individuum 102. Insbesondere werden die weiteren Gegenstände 104 zusammen mit dem weiteren Individuum 102 von der Steuer- und/oder Regeleinheit 20 als zusammengehöriger weiterer Schwarm identifiziert. Es ist vorteilhaft infolge einer Berücksichtigung der Bewegungshistorie der Gegenstände 26, 104 und der Individuen 24, 102 eine zuverlässige Zuordnung von Gegenständen 26, 104 zum jeweiligen Individuum 24, 102, das sich über die zumindest im Wesentlichen gesamte Bewegungshistorie zusammen mit den jeweiligen Gegenständen 26, 104 bewegt hat, möglich. Die vorgenommene Zuordnung der Gegenstände 26, 104 zu dem entsprechenden Individuum 24, 102 wird bis zu einer Veränderung, wie beispielsweise ein Aufnehmen eines weiteren Gegenstands 26, 104, ein Ablegen eines Gegenstands 26, 104 o. dgl., im System 10 beibehalten.

In zumindest einem Verfahrensschritt erfolgen/erfolgt zumindest in Abhängigkeit einer Zuordnung zumindest eines Gegenstands 26 zu zumindest einem Individuum 24 eine Zugangsberechtigung zu einem Arbeitsbereich oder zu einem Raum und/oder eine Arbeitsberechtigung zu einer Nutzung des Gegenstands 26. Ferner erfolgt in zumindest einem Verfahrensschritt in Abhängigkeit einer Zuordnung zumindest eines Gegenstands 26 zu zumindest einem Individuum 24 eine Informationsausgabe mittels der Ausgabeeinheit 32 des Funktionsmoduls 12 und/oder mittels der Ausgabeeinheit 34 der Gebäudeinfrastrukturvorrichtung 16. Befinden sich beispielsweise beide Individuen 24, 102 zu einer Durchführung von Wartungs- und/oder Servicearbeiten gemeinsam in einer Zelle ist aus der Bewegungshistorie, insbesondere infolge der Zuordnung von Gegenstände 26, 104 zu dem entsprechenden Individuum 24, 102, bekannt, welche Gegenstände 26, 104 welches Individuum 24, 102 mit sich führt. Ist beispielsweise ein als Schutzbrille ausgebildetes Sicherheitskleidungsstück 30 zu einer Durchführung der Wartungs- und/oder Servicearbeiten in der Zelle vorgeschrieben und nur einer der Individuen 24, 102 trägt gemäß der Zuordnung einen als Schutzbrille ausgebildeten Gegenstand 26, ist nur diesem Individuum 24 eine Durchführung der Wartungs- und/oder Servicearbeiten erlaubt. Dem Individuum 24, das den als Schutzbrille ausgebildeten Gegenstand 26 trägt, ist beispielsweise infolge einer Kommunikation zwischen dem Funktionsmodul 12 der Gebäudeinfrastrukturvorrichtung 16 eine Inbetriebnahme einer tragbaren Werkzeugmaschine 28 freigebbar und/oder es ist lediglich ihm ein Zugang zu der Zelle, in der Wartungs- und/oder Servicearbeiten durchführbar sind, erlaubt. Dem Individuum 102, das keinen als Schutzbrille ausgebildeten Gegenstand 104 trägt, ist mittels der Ausgabeeinheit 32 des Funktionsmoduls 12 und/oder mittels der Ausgabeeinheit 34 der Gebäudeinfrastrukturvorrichtung 16 eine Information hinsichtlich einer Handlungsweise ausgebbar, wie beispielsweis eine Handlungsanweisung zu einer Besorgung einer Schutzbrille bei einer Werkzeugausgabe, zu einem Aufsetzen einer in der Zelle angeordneten Schutzbrille und ein anschließendes Bestätigen des Aufsetzens oder weitere, einem Fachmann als sinnvoll erscheinende Informationen.

Das oben beschriebene System 10 und/oder das oben beschriebene Verfahren sind/ist nicht auf die Anwendung in einem Handwerkzeugmaschinenbereich beschränkt. Es ist beispielsweise auch in einem Bürobereich anwendbar, wie dies an folgendem Beispiel kurz erläutert werden soll. Ist ein Individuum 24 beispielsweise zu einem Meeting eingeladen und soll einen bestimmten Gegenstand 26, wie beispielswiese einen Moderatorenkoffer, ein Skript, einen Laptop o. dgl., mitbringen, ist dies mittels des Systems 10 überwachbar. Eine Einladung zum Meeting kann elektronisch innerhalb des Systems 10 hinterlegt sein. Somit sind alle Informationen hinsichtlich des Meetings im System 10 verfügbar. Es kann anhand eines Abgleichens eines Bewegungsprofils des Individuums 24 und eines Bewegungsprofils des Gegenstands 26 überprüft werden, ob das Individuum 24 den Gegenstand 26 bei sich trägt. Wird erkannt, dass das Individuum 24 den Gegenstand 26 nicht bei sich trägt, kann mittels der Ausgabeeinheit 32 des Funktionsmoduls 12, das insbesondere am Individuum 24 angeordnet ist, mittels der Ausgabeeinheit 34 der Gebäudeinfrastrukturvorrichtung 16 und/oder mittels einer Ausgabeeinheit (hier nicht näher dargestellt) der externen Einheit 36, die beispielsweise als Smartphone des Individuums 24 ausgebildet ist und mit der Gebäudeinfrastrukturvorrichtung 16 kommuniziert, eine entsprechende Information ausgegeben werden.

Das Verfahren ist zudem auch im Privatbereich anwendbar. Beispielsweise kann im System 10 für ein Individuum 24 ein elektronischer Stundenplan hinterlegt sein und damit auch welche Art von Bücher an welchem Tag mitzuführen sind. Wird beispielsweise infolge einer Zuordnung von Gegenständen 26 zum Individuum 24 auf dem Weg von einem Kinderzimmer in eine Küche festgestellt, dass ein Buch nicht mitgeführt wird, kann diese Information beispielsweise infolge einer Kommunikation der Gebäudeinfrastrukturvorrichtung 16 an eine als SMART-Haustür, als SMART-Garderobe ausgebildete externe Einheit 36 gesendet werden, welche beispielsweise beim Anziehen von Schuhen, einer Jacke o. dgl., dem Individuum 24 akustisch und/oder optisch mitteilt, dass ein Buch fehlt. Reagiert das Individuum 24 nicht, kann die SMART-Haustür einen Austritt sperren und es ist an der SMART-Haustür ein weiterer Hinweis anzeigbar, welcher beispielsweise quittiert werden muss oder das Buch wird geholt.

## Patentansprüche

1. System, insbesondere Handwerkzeugmaschinensystem, mit zumindest einem mobilen Funktionsmodul (12), das zumindest eine Kommunikationseinheit (14) zu einer Kommunikation von elektronischen Daten aufweist, mit zumindest einer Gebäudeinfrastrukturvorrichtung, die zumindest eine Kommunikationseinheit (18) zu einer Kommunikation mit dem Funktionsmodul (12) aufweist, und mit zumindest einer Steuer- oder Regeleinheit (20), die dazu vorgesehen ist, anhand einer Auswertung einer Kommunikation zwischen dem Funktionsmodul (12) und der Gebäudeinfrastrukturvorrichtung auf eine Position des Funktionsmoduls (12) zu schließen, wobei das Funktionsmodul (12) dazu vorgesehen ist, zumindest eine gegenstandsspezifische Kenngröße, eine bedienerspezifische Kenngröße und/oder eine umgebungsspezifische Kenngröße zu erfassen und/oder an die Gebäudeinfrastrukturvorrichtung zu übertragen, **dadurch gekennzeichnet, dass** die Steuer- oder Regeleinheit (20) eine Zuordnungsfunktion aufweist, die dazu vorgesehen ist, in Abhängigkeit von den zwischen dem Funktionsmodul (12) und der Gebäudeinfrastrukturvorrichtung übertragenen Daten eine Zuordnung zumindest eines Gegenstands (26), an dem das Funktionsmodul (12) angeordnet ist, zu einem Individuum (24) in Abhängigkeit einer gemeinsamen Bewegung zu realisieren.

2. System nach Anspruch 1, **dadurch gekennzeichnet, dass** das Funktionsmodul (12) zumindest eine Sensoreinheit (22) aufweist, die dazu vorgesehen ist, die zumindest eine gegenstandsspezifische Kenngröße, bedienerspezifische Kenngröße und/oder umgebungsspezifische Kenngröße zumindest teilweise automatisch zu erfassen.

3. System nach Anspruch 1 oder 2, **dadurch gekennzeichnet, dass** die Steuer- oder Regeleinheit (20) zumindest eine Auswertefunktion aufweist, die dazu vorgesehen ist, in Abhängigkeit von den zwischen dem Funktionsmodul (12) und der Gebäudeinfrastrukturvorrichtung übertragenen Daten auf einen Vitalzustand des Individuums (24), auf eine Belastung des Individuums (24) und/oder auf ein Gefährdungspotential des Individuums (24) zu schließen.

4. System nach einem der vorhergehenden Ansprüche, **dadurch gekennzeichnet, dass** die Steuer- oder Regeleinheit (20) zumindest eine Zugangskontrollfunktion aufweist, die dazu vorgesehen ist, in Abhängigkeit von den zwischen dem Funktionsmodul (12) und der Gebäudeinfrastrukturvorrichtung übertragenen Daten einen Zugang des zumindest einen Gegenstands (26) und/oder des Individuums (24), an dem das Funktionsmodul (12) angeordnet ist, zu einem Arbeitsbereich oder zu einem Raum zu überwachen, freizugeben oder zu sperren.

5. System nach einem der vorhergehenden Ansprüche, **dadurch gekennzeichnet, dass** die Steuer- oder Regeleinheit (20) dazu vorgesehen ist, in Abhängigkeit von den zwischen dem Funktionsmodul (12) und der Gebäudeinfrastrukturvorrichtung übertragenen Daten mittels des Funktionsmoduls (12) aktiv in eine Steuerung und/oder Regelung eines als tragbare Werkzeugmaschine (28) ausgebildeten Gegenstands (26), an dem das Funktionsmodul (12) angeordnet ist, einzugreifen.

6. System nach einem der vorhergehenden Ansprüche, **dadurch gekennzeichnet, dass** die Steuer- oder Regeleinheit (20) zumindest eine Überwachungsfunktion aufweist, die dazu vorgesehen ist, zumindest in Abhängigkeit von den zwischen dem Funktionsmodul (12) und der Gebäudeinfrastrukturvorrichtung übertragenen Daten ein Vorhandensein von zumindest einem vorgeschriebenen Sicherheitskleidungsstück (30) und/oder einer Kombination von vorgeschriebenen Sicherheitskleidungsstücken (30) zu überwachen.

7. System nach einem der vorhergehenden Ansprüche, **dadurch gekennzeichnet, dass** die Steuer- oder Regeleinheit (20) zumindest eine Ausgabefunktion aufweist, die dazu vorgesehen ist, in Abhängigkeit von den zwischen dem Funktionsmodul (12) und der Gebäudeinfrastrukturvorrichtung übertragenen Daten zumindest eine Information mittels einer Ausgabeeinheit (32, 34) des Funktionsmoduls (12) und/oder der Gebäudeinfrastrukturvorrichtung auszugeben.

8. System nach einem der vorhergehenden Ansprüche, **dadurch gekennzeichnet, dass** die Steuer- oder Regeleinheit (20) zumindest eine Berechtigungsfunktion aufweist, die dazu vorgesehen ist, in Abhängigkeit von den zwischen dem Funktionsmodul (12) und der Gebäudeinfrastrukturvorrichtung übertragenen Daten zumindest eine Berechtigung einer Nutzung des Gegenstands (26), an dem das Funktionsmodul (12) angeordnet ist, vorzugeben.

9. System nach einem der vorhergehenden Ansprüche, **dadurch gekennzeichnet, dass** die Kommunikationseinheit (18) der Gebäudeinfrastrukturvorrichtung dazu vorgesehen ist, elektronische Daten an eine externe Einheit (36), die verschieden vom Funktionsmodul (12) ausgebildet ist, zu übertragen.

10. System nach einem der vorhergehenden Ansprüche, **dadurch gekennzeichnet, dass** das mobile Funktionsmodul (12) als autonomes Fortbewegungsgerät (106) ausgebildet ist oder an einem autonomen Fortbewegungsgerät (106) angeordnet ist.

11. System nach einem der vorhergehenden Ansprüche, **dadurch gekennzeichnet, dass** die Gebäudeinfrastrukturvorrichtung zumindest eine Sicherheitstechnikeinheit (38) zu einer Erfassung und/oder Auswertung zumindest einer Sicherheitskenngröße umfasst.

12. System nach Anspruch 11, **dadurch gekennzeichnet, dass** die Sicherheitstechnikeinheit (38) zumindest eine Sensoreinheit (40) zu einer Erfassung zumindest einer Rauchkenngröße, einer Bewegungskenngröße, einer Annäherungskenngröße, einer Wärmekenngröße und/oder einer Zugangskenngröße aufweist.

13. System nach einem der vorherigen Ansprüche, **dadurch gekennzeichnet, dass** die Gebäudeinfrastrukturvorrichtung zumindest eine Schnittstelleneinheit (42; 42') zu einer Verbindung mit einer Erweiterungsvorrichtung (44; 44') aufweist, wobei die Erweiterungsvorrichtung (44; 44') zumindest eine Kommunikationseinheit (18; 46') zu einer Kommunikation von elektronischen Daten mit zumindest einem externen Funktionsmodul (12) umfasst.

14. System nach Anspruch 13, **dadurch gekennzeichnet, dass** die Schnittstelleneinheit (42') zu einer lösbaren Verbindung mit der Erweiterungsvorrichtung (44') vorgesehen ist.

15. System nach einem der vorherigen Ansprüche, **dadurch gekennzeichnet, dass** die Gebäudeinfrastrukturvorrichtung zumindest eine Energieschnittstelle (108) aufweist, die zu einer kabellosen Aufnahme und/oder Abgabe von elektrischer Energie vorgesehen ist.

16. Verfahren zu einer Lokalisierung und/oder zu einer Überwachung zumindest eines Gegenstands (26) und/oder zumindest eines Individuums (24) mittels eines Systems nach einem der Ansprüche 1 bis 15.

17. Verfahren nach Anspruch 16, **dadurch gekennzeichnet, dass** in zumindest einem Verfahrensschritt eine Bewegungshistorie zu einer Zuordnung des zumindest einen Gegenstands (26), an dem das Funktionsmodul (12) angeordnet ist, zu dem Individuum (24) genutzt wird.

18. Verfahren nach einem der Ansprüche 16 oder 17, **dadurch gekennzeichnet, dass** in zumindest einem Verfahrensschritt in Abhängigkeit einer Zuordnung des zumindest einen Gegenstands (26) zu dem Individuum (24) eine Zugangsberechtigung zu einem Arbeitsbereich oder zu einem Raum und/oder eine Arbeitsberechtigung zu einer Nutzung des Gegenstands (26) erfolgt.

19. Verfahren nach einem der Ansprüche 16 bis 18, **dadurch gekennzeichnet, dass** in zumindest einem Verfahrensschritt in Abhängigkeit einer Zuordnung des zumindest einen Gegenstands (26) zu dem Individuum (24) eine Informationsausgabe mittels einer Ausgabeeinheit (32, 34) erfolgt.

## Claims

1. System, in particular a portable power tool system, having at least one mobile functional module (12) which has at least one communication unit (14) for communicating electronic data, having at least one building infrastructure apparatus which has at least one communication unit (18) for communicating with the functional module (12), and having at least one control or regulation unit (20) which is intended to infer a position of the functional module (12) on the basis of an evaluation of communication between the functional module (12) and the building infrastructure apparatus, **wherein** the functional module (12) is intended to record at least one object-specific characteristic variable, one operator-specific characteristic variable and/or one environment-specific characteristic variable and/or to transmit it/them to the building infrastructure apparatus, **characterized in that** the control or regulation unit (20) has an assignment function which is intended to assign at least one object (26), on which the functional module (12) is arranged, to an individual (24) on the basis of a common movement on the basis of the data transmitted between the functional module (12) and the building infrastructure apparatus.

2. System according to Claim 1, **characterized in that** the functional module (12) has at least one sensor unit (22) which is intended to record the at least one object-specific characteristic variable, operator-specific characteristic variable and/or environment-specific characteristic variable in an at least partially automatic manner.

3. System according to Claim 1 or 2, **characterized in that** the control or regulation unit (20) has at least one evaluation function which is intended to infer a vital state of the individual (24), a burden on the individual (24) and/or a potential risk to the individual (24) on the basis of the data transmitted between the functional module (12) and the building infrastructure apparatus.

4. System according to one of the preceding claims, **characterized in that** the control or regulation unit (20) has at least one access control function which is intended to monitor, enable or block access of the at least one object (26) and/or of the individual (24), on which/whom the functional module (12) is arranged, to a working area or to a room on the basis of the data transmitted between the functional module (12) and the building infrastructure apparatus.

5. System according to one of the preceding claims, **characterized in that** the control or regulation unit (20) is intended to actively intervene in control and/or regulation of an object (26), which is in the form of a portable machine tool (28) and on which the functional module (12) is arranged, by means of the functional module (12) on the basis of the data transmitted between the functional module (12) and the building infrastructure apparatus.

6. System according to one of the preceding claims, **characterized in that** the control or regulation unit (20) has at least one monitoring function which is intended to monitor the presence of at least one item of prescribed safety clothing (30) and/or a combination of items of prescribed safety clothing (30) at least on the basis of the data transmitted between the functional module (12) and the building infrastructure apparatus.

7. System according to one of the preceding claims, **characterized in that** the control or regulation unit (20) has at least one output function which is intended to output at least one item of information by means of an output unit (32, 34) of the functional module (12) and/or of the building infrastructure apparatus on the basis of the data transmitted between the functional module (12) and the building infrastructure apparatus.

8. System according to one of the preceding claims, **characterized in that** the control or regulation unit (20) has at least one authorization function which is intended to predefine at least one authorization to use the object (26), on which the functional module (12) is arranged, on the basis of the data transmitted between the functional module (12) and the building infrastructure apparatus.

9. System according to one of the preceding claims, **characterized in that** the communication unit (18) of the building infrastructure apparatus is intended to transmit electronic data to an external unit (36) which differs from the functional module (12).

10. System according to one of the preceding claims, **characterized in that** the mobile functional module (12) is in the form of an autonomous locomotion device (106) or is arranged on an autonomous locomotion device (106).

11. System according to one- of the preceding claims, **characterized in that** the building infrastructure apparatus comprises at least one safety technology unit (38) for recording and/or evaluating at least one safety characteristic variable.

12. System according to Claim 11, **characterized in that** the safety technology unit (38) has at least one sensor unit (40) for recording at least one smoke characteristic variable, a movement characteristic variable, an approach characteristic variable, a heat characteristic variable and/or an access characteristic variable.

13. System according to one of the preceding claims, **characterized in that** the building infrastructure apparatus has at least one interface unit (42; 42') for connection to an expansion apparatus (44; 44'), wherein the expansion apparatus (44; 44') comprises at least one communication unit (18; 46') for communicating electronic data with at least one external functional module (12).

14. System according to Claim 13, **characterized in that** the interface unit (42') is intended for a releasable connection to the expansion apparatus (44').

15. System according to one of the preceding claims, **characterized in that** the building infrastructure apparatus has at least one energy interface (108) which is intended to wirelessly receive and/or output electrical energy.

16. Method for locating and/or monitoring at least one object (26) and/or at least one individual (24) by means of a system as claimed in one of Claims 1 to 15.

17. Method according to Claim 16, **characterized in that,** in at least one method step, a movement history is used to assign the at least one object (26), on which the functional module (12) is arranged, to the individual (24).

18. Method according to either of Claims 16 and 17, **characterized in that,** in at least one method step, an access authorization for a working area or for a room and/or a work authorization for using the object (26) is/are given on the basis of an assignment of the at least one object (26) to the individual (24).

19. Method according to one of Claims 16 to 18, **characterized in that,** in at least one method step, information is output by means of an output unit (32, 34) on the basis of an assignment of the at least one object (26) to the individual (24).

## Revendications

1. Système, en particulier système de machine-outil à main, comprenant au moins un module fonctionnel (12) mobile qui comporte au moins une unité de communication (14) destinée à communiquer des données électroniques, au moins un dispositif d'infrastructure de bâtiment qui comporte au moins une unité de communication (18) destinée à communiquer avec le module fonctionnel (12), et au moins une unité de commande ou de régulation (20) qui est prévue pour déterminer une position du module fonctionnel (12) sur la base d'une évaluation d'une communication entre le module fonctionnel (12) et le dispositif d'infrastructure de bâtiment, dans lequel le module fonctionnel (12) est prévu pour détecter et/ou transmettre au dispositif d'infrastructure de bâtiment au moins une grandeur caractéristique spécifique à l'objet et/ou une grandeur caractéristique spécifique à l'utilisateur et/ou une grandeur caractéristique spécifique à l'environnement,
**caractérisé en ce que** l'unité de commande ou de régulation (20) présente une fonction d'affectation qui est destinée, en fonction des données transmises entre le module fonctionnel (12) et le dispositif d'infrastructure de bâtiment, à réaliser une affectation d'au moins un objet (26), sur lequel le module fonctionnel (12) est disposé, à un individu (24) en fonction d'un mouvement commun.

2. Système selon la revendication 1, **caractérisé en ce que** le module fonctionnel (12) comporte au moins une unité de détection (22) qui est prévue pour détecter de manière au moins partiellement automatique ladite au moins une grandeur caractéristique spécifique à l'objet, ladite au moins une grandeur caractéristique spécifique à l'utilisateur et/ou ladite au moins une grandeur caractéristique spécifique à l'environnement.

3. Système selon la revendication 1 ou 2, **caractérisé en ce que** l'unité de commande ou de régulation (20) comporte au moins une fonction d'évaluation qui est prévue pour déterminer, en fonction des données transmises entre le module fonctionnel (12) et le dispositif d'infrastructure de bâtiment, un état vital de l'individu (24), une charge imposée à l'individu (24) et/ou un potentiel de risque auquel est exposé l'individu (24).

4. Système selon l'une des revendications précédentes, **caractérisé en ce que** l'unité de commande ou de régulation (20) comporte au moins une fonction de contrôle d'accès qui est prévue, en fonction des données transmises entre le module fonctionnel (12) et le dispositif d'infrastructure de bâtiment, pour surveiller, libérer ou bloquer l'accès d'au moins un objet (26) et/ou de l'individu (24), sur lequel est disposé le module fonctionnel (12), à une zone de travail ou à un espace.

5. Système selon l'une des revendications précédentes, **caractérisé en ce que** l'unité de commande ou de régulation (20) est prévue pour intervenir activement, en fonction des données transmises entre le module fonctionnel (12) et le dispositif d'infrastructure de bâtiment au moyen du module fonctionnel (12), dans une commande et/ou une régulation d'un objet (26), qui est réalisé sous la forme d'une machine-outil portable (28) et sur lequel est disposé le module fonctionnel (12).

6. Système selon l'une des revendications précédentes, **caractérisé en ce que** l'unité de commande ou de régulation (20) présente au moins une fonction de surveillance qui est prévue pour surveiller, au moins en fonction des données transmises entre le module fonctionnel (12) et le dispositif d'infrastructure de bâtiment, la présence d'au moins un vêtement de sécurité prescrit (30) et/ou d'une combinaison de vêtements de sécurité prescrits (30).

7. Système selon l'une des revendications précédentes, **caractérisé en ce que** l'unité de commande ou de régulation (20) présente au moins une fonction de sortie qui est prévue pour fournir en sortie, en fonction des données transmises entre le module fonctionnel (12) et le dispositif d'infrastructure de bâtiment, au moins une information au moyen d'une unité de sortie (32, 34) du module fonctionnel (12) et/ou du dispositif d'infrastructure de bâtiment.

8. Système selon l'une des revendications précédentes, **caractérisé en ce que** l'unité de commande ou de régulation (20) présente au moins une fonction d'autorisation qui est prévue, en fonction des données transmises entre le module fonctionnel (12) et le dispositif d'infrastructure de bâtiment, pour prescrire au moins une autorisation d'utilisation de l'objet (26) sur lequel est disposé le module fonctionnel (12).

9. Système selon l'une des revendications précédentes, **caractérisé en ce que** l'unité de communication (18) du dispositif d'infrastructure de bâtiment est prévue pour transmettre des données électroniques à une unité externe (36) qui est différente du module fonctionnel (12).

10. Système selon l'une des revendications précédentes, **caractérisé en ce que** le module fonctionnel (12) mobile est réalisé sous la forme d'un appareil de locomotion autonome (106) ou est disposé sur un appareil de locomotion autonome (106).

11. Système selon l'une des revendications précédentes, **caractérisé en ce que** le dispositif d'infrastructure de bâtiment comprend au moins une unité de sécurité (38) permettant de détecter et/ou d'évaluer au moins une grandeur caractéristique de sécurité.

12. Système selon la revendication 11, **caractérisé en ce que** l'unité de sécurité (38) comporte au moins une unité de détection (40) destinée à détecter au moins une grandeur caractéristique de fumée, une grandeur caractéristique de mouvement, une grandeur caractéristique de rapprochement, une grandeur caractéristique thermique et une grandeur caractéristique d'accès.

13. Système selon l'une des revendications précédentes, **caractérisé en ce que** le dispositif d'infrastructure de bâtiment comprend au moins une unité d'interface (42 ; 42') permettant une connexion à un dispositif d'extension (44 ; 44'), dans lequel le dispositif d'extension (44 ; 44') comprend au moins une unité de communication (18 ; 46') destinée à communiquer des données électroniques avec au moins un module fonctionnel (12) externe.

14. Système selon la revendication 13, **caractérisé en ce que** l'unité d'interface (42') est prévue pour une connexion amovible au dispositif d'extension (44').

15. Système selon l'une des revendications précédentes, **caractérisé en ce que** le dispositif d'infrastructure de bâtiment comprend au moins une interface d'énergie (108) prévue pour recevoir et/ou délivrer sans fil de l'énergie électrique.

16. Procédé de localisation et/ou de surveillance d'au moins un objet (26) et/ou d'au moins un individu (24) au moyen d'un système selon l'une des revendications 1 à 15.

17. Procédé selon la revendication 16, **caractérisé en ce que**, dans au moins une étape du procédé, un historique des mouvements est utilisé pour une affectation à l'individu (24) dudit au moins un objet (26) sur lequel est disposé le module fonctionnel (12).

18. Procédé selon l'une des revendications 16 ou 17, **caractérisé en ce que**, dans au moins une étape du procédé, une autorisation d'accès à une zone de travail ou à un espace et/ou une autorisation de travail pour utiliser l'objet (26) est fournie en fonction d'une affectation dudit au moins un objet (26) à l'individu (24).

19. Procédé selon l'une des revendications 16 à 18, **caractérisé en ce que**, dans au moins une étape du procédé, une sortie d'informations est effectuée au moyen d'une unité de sortie (32, 34) en fonction d'une affectation dudit au moins un objet (26) à l'individu (24).
